# EUROPÄISCHE PATENTSCHRIFT

(11) **EP 4 680 553 B1**
(45) Veröffentlichungstag und Bekanntmachung des Hinweises auf die Patenterteilung: **20.05.2026**
(21) Anmeldenummer: 24721557.7
(22) Anmeldetag: 19.04.2024
(51) Int. Cl.: B65G 21/06, B60L 13/00, B65G 21/10, B65G 47/64, B65G 54/02, H02K 41/00

(54) **LINEARES TRANSPORTSYSTEM**
LINEAR TRANSPORT SYSTEM
SYSTÈME DE TRANSPORT LINÉAIRE

(30) Priorität: 25.04.2023 DE 102023110521
(43) Veröffentlichungstag der Anmeldung: 21.01.2026
(73) Patentinhaber: Beckhoff Automation GmbH, 33415 Verl (DE)
(72) Erfinder: PRUESSMEIER, Uwe, 32657 Lemgo (DE); PEHLIVAN, Armin, 6714 Nüziders (AT); WÜRTHNER, Frank, 78083 Dauchingen (DE); MORSCHER-UNGER, Thomas, 1050 Wien (AT); BÖHNKE, Ray, 33415 Verl (DE); KASTLER, Peter, 1220 Wien (AT)
(74) Vertreter: Patentanwaltskanzlei WILHELM & BECK
(86) Internationale Anmeldenummer: PCT/EP2024/060729
(87) Internationale Veröffentlichungsnummer: WO 2024/223435

(56) Entgegenhaltungen:
- EP-B1- 0 490 945
- EP-B1- 0 820 862
- JP-A- H04 176 740
- US-A1- 2004 168 604
- US-A1- 2016 159 585

## Beschreibung

Die Patentanmeldung beansprucht die Priorität der deutschen Patentanmeldung 10 2023 110 521.3, deren Offenbarungsgehalt hiermit durch Rückbezug aufgenommen wird.

Die Erfindung betrifft ein lineares Transportsystem.

Aus dem Stand der Technik sind lineare Transportsysteme bekannt. Die DE 10 2014 100 636 A1 beschreibt beispielsweise ein lineares Transportsystem mit einer beweglichen Einheit, einer Führungsschiene zum Führen der beweglichen Einheit sowie einem Linearmotor zum Antreiben der beweglichen Einheit entlang der Führungsschiene, wobei der Linearmotor einen Stator und einen Läufer umfasst, wobei der Stator mehrere entlang der Führungsschiene stationär angeordnete Motormodule aufweist, welche jeweils mehrere Antriebsspulen aufweisen, wobei der Läufer an der beweglichen Einheit angeordnet ist und mehrere Magnete umfasst. Solche linearen Transportsysteme können beispielsweise in der Automatisierungstechnik und/oder der Fertigungstechnik eingesetzt werden und zu bearbeitende Produkte transportieren.

Ein solches lineares Transportsystem weist insbesondere eine durchgehende, also in sich geschlossene, Führungsschiene auf. Dadurch können die beweglichen Einheiten auf einer geschlossenen Bahn bewegt werden. In solchen linearen Transportsystemen wird ein zu bearbeitendes Produkt immer über einen vorgegebenen Weg geführt. Aus dem Stand der Technik sind ferner weitere Ansätze bekannt, flexiblere lineare Transportsysteme bereitzustellen. Aus der EP 3 109 998 A1 ist beispielsweise ein lineares Transportsystem bekannt, bei dem eine bewegliche Einheit von einem Teilsystem in ein anderes Teilsystem übergeben werden kann. Durch das in der EP 3 109 998 A1 offenbarte Verfahren sind jedoch die Möglichkeiten, wie ein Objekt an den beweglichen Einheiten angeordnet werden kann, also wie die bewegliche Einheit das Objekt trägt und transportiert, eingeschränkt, da die beweglichen Einheiten derart ausgestaltet sein müssen, dass sie mit zwei unterschiedlichen Seiten jeweils an einem von zwei Langstatorlinearmotoren angeordnet sind. Dadurch können Objekte nur oberhalb oder unterhalb der Langstatorlinearmotoren angeordnet sein.

Ein lineares Transportsystem mit den Merkmalen der Oberbegriffs des Anspruch 1 ist aus der US 2016/159585 A1 bekannt.

Es ist eine Aufgabe der Erfindung, ein flexibles lineares Transportsystem bereitzustellen. Eine weitere Aufgabe der Erfindung ist es, ein Verfahren zum Betreiben eines solchen linearen Transportsystems bereitzustellen. Eine weitere Aufgabe der Erfindung ist es, eine Weiche für ein lineares Transportsystem bereitzustellen. Diese Aufgaben werden mit den Gegenständen der unabhängigen Patentansprüche gelöst. Vorteilhafte Ausgestaltungen sind in den abhängigen Patentansprüchen angegeben.

Die Erfindung betrifft ein lineares Transportsystem mit einer beweglichen Einheit, einer Führungsschiene zum Führen der beweglichen Einheit sowie einem Linearmotor zum Antreiben der beweglichen Einheit entlang der Führungsschiene. Der Linearmotor umfasst einen Stator und einen Läufer. Der Stator weist mehrere entlang der Führungsschiene stationär angeordnete Motormodule auf, welche jeweils mehrere Antriebsspulen aufweisen. Der Läufer ist an der beweglichen Einheit angeordnet und umfasst mehrere Magnete. Die Führungsschiene ist an den Motormodulen angeordnet. Das lineare Transportsystem weist zumindest eine Weiche auf. Die Weiche weist zumindest ein statisches Einfahrelement mit einem Einfahrmotormodul und einem zur Führungsschiene gehörigen Einfahrschienenelement auf. Die Weiche weist ferner zumindest zwei statische Ausfahrelemente mit jeweils einem Ausfahrmotormodul und jeweils einem zur Führungsschiene gehörigen Ausfahrschienenelement auf. Ferner weist die Weiche eine Wechselvorrichtung auf. Die Wechselvorrichtung weist zumindest zwei Austauschelemente mit jeweils einem Austauschmotormodul und jeweils einem zur Führungsschiene gehörigen Austauschschienenelement auf. In einer ersten Position der Wechselvorrichtung ist das Einfahrelement über ein erstes Austauschelement mit einem ersten Ausfahrelement verbunden. In einer zweiten Position der Wechselvorrichtung ist das Einfahrelement über ein zweites Austauschelement mit einem zweiten Ausfahrelement verbunden.

Das erste Austauschelement und das zweite Austauschelement können dabei zwischen dem Einfahrelement und den Ausfahrelementen ausgetauscht werden. Eine bewegliche Einheit kann insbesondere die Weiche über das Einfahrelement erreichen und dann entweder über das erste Austauschelement zum ersten Ausfahrelement oder über das zweite Austauschelement zum zweiten Ausfahrelement gelangen. Dadurch kann beispielsweise ein Produktstrom geteilt werden und so verschiedene Produkte zu verschiedenen Bearbeitungsstationen geführt werden. Insgesamt ergibt sich so ein deutlich flexibleres lineares Transportsystem.

Sind mehr als zwei Ausfahrelemente vorgesehen, kann insbesondere eine Anzahl der Austauschelemente an eine Anzahl der Ausfahrelemente angepasst sein. Sind zusätzlich mehrere Einfahrelemente vorgesehen, kann eine Anzahl von Austauschelementen einem Produkt einer Anzahl der Einfahrelemente mit einer Anzahl der Ausfahrelemente entsprechen.

Die Erfindung betrifft ferner ein Verfahren zum Betreiben eines solchen linearen Transportsystems. In diesem Verfahren wird zunächst eine Stellung einer Wechselvorrichtung des linearen Transportsystems, also insbesondere einer Weiche des linearen Transportsystems, festgestellt. Anschließend wird ein Steuerprogramm anhand der Stellung ausgewählt. Ferner erfolgt ein logisches Weiterschalten von Antriebsspulen des linearen Transportsystems anhand der festgestellten Stellung. Dieses Verfahren kann insbesondere durch eine Steuereinheit des linearen Transportsystems durchgeführt werden.

Die Erfindung betrifft ferner eine Weiche für ein lineares Transportsystem. Die Weiche weist zumindest ein statisches Einfahrelement mit einem Einfahrmotormodul und einem zur Führungsschiene gehörigen Einfahrschienenelement auf. Die Weiche weist ferner zumindest zwei statische Ausfahrelemente mit jeweils einem Ausfahrmotormodul und jeweils einem zur Führungsschiene gehörigen Ausfahrschienenelement auf. Ferner weist die Weiche eine Wechselvorrichtung auf. Die Wechselvorrichtung weist zumindest zwei Austauschelemente mit jeweils einem Austauschmotormodul und jeweils einem zur Führungsschiene gehörigen Austauschschienenelement auf. In einer ersten Position der Wechselvorrichtung ist das Einfahrelement über ein erstes Austauschelement mit einem ersten Ausfahrelement verbunden. In einer zweiten Position der Wechselvorrichtung ist das Einfahrelement über ein zweites Austauschelement mit einem zweiten Ausfahrelement verbunden.

Es kann vorgesehen sein, dass das lineare Transportsystem mehr als eine solche Weiche beinhaltet. In diesem Fall kann vorgesehen sein, dass eine weitere Weiche mehrere Einfahrelemente und gegebenenfalls nur ein Ausfahrelement beinhaltet. So kann ein mittels der Weiche aufgeteilter Produktstrom mittels der weiteren Weiche wieder zusammengeführt werden.

In einer Ausführungsform des linearen Transportsystems beziehungsweise der Weiche weist die Wechselvorrichtung ein bewegliches Weichenelement auf. Das erste Austauschelement ist fest mit dem beweglichen Weichenelement verbunden. Das zweite Austauschelement ist fest mit dem beweglichen Weichenelement verbunden. Das bewegliche Weichenelement kann insbesondere dazu dienen, das erste Austauschelement beziehungsweise die Wechselvorrichtung in die erste Position und das zweite Austauschelement beziehungsweise die Wechselvorrichtung in die zweite Position zu bringen.

In einer Ausführungsform des linearen Transportsystems beziehungsweise der Weiche weist die Wechselvorrichtung mehr als zwei Austauschelemente mit jeweils einem Austauschmotormodul und jeweils einem zur Führungsschiene gehörigen Austauschschienenelement auf. Die Weiche weist ferner eine der Anzahl der Austauschelemente angepasste Anzahl an statischen Ausfahrelementen mit jeweils einem Ausfahrmotormodul und jeweils einem zur Führungsschiene gehörigen Ausfahrschienenelement auf. Dies ermöglicht, mehr als zwei Ausfahrelemente mittels der Weiche zu erreichen.

In einer Ausführungsform des linearen Transportsystems beziehungsweise der Weiche ist zumindest ein Austauschelement gebogen. Insbesondere können auch beide Austauschelemente oder mehr als ein Austauschelement gebogen sein. Dadurch kann die Weiche beziehungsweise das lineare Transportsystem noch flexibler gestaltet werden.

Das Austauschelement besteht zumindest aus dem Austauschschienenelement und dem Austauschmotormodul. Das Austauschelement kann linear sein. In diesem Fall kann das Austauschschienenelement in eine Haupterstreckungsrichtung angeordnet sein und das Austauschmotormodul am Austauschschienenelement angeordnet sein. Das Austauschmotormodul kann insbesondere parallel zum Austauschschienenelement angeordnet sein. Ein lineares Austauschelement ist nicht gebogen. Ein gebogenes Austauschelement kann ein Austauschschienenelement aufweisen, das mit zumindest einer Krümmung mit einem Krümmungsradius aus einer Haupterstreckungsrichtung herausgebogen ist. Dabei kann die Krümmung des Austauschschienenelements derart ausgestaltet sein, dass das Austauschschienenelement zumindest einer Kurvenline folgt und so eine Bewegungsbahn für eine bewegliche Einheit vorgibt, mit der die bewegliche Einheit derart geführt wird, dass die bewegliche Einheit eine Kurvenbewegung ausführt. Insbesondere kann die bewegliche Einheit also außerhalb der Haupterstreckungsrichtung bewegt werden. Das Austauschmotormodul kann hier ebenfalls parallel zum Austauschschienenelement angeordnet sein und der Krümmung des Austauschschienenelements folgen. Ein lineares Austauschelement ermöglicht also eine Bewegung der beweglichen Einheit entlang einer Gerade, ein gebogenes Austauschelement ermöglicht eine Bewegung der beweglichen Einheit entlang einer gekrümmten Bewegungsbahn.

In einer Ausführungsform des linearen Transportsystems beziehungsweise der Weiche weist das lineare Transportsystem beziehungsweise die Weiche eine Hauptebene auf. Die Hauptebene ist durch das Einfahrmotormodul und das Einfahrschienenelement aufgespannt. Eine erste Ausfahrebene steht senkrecht auf der Hauptebene und ist durch das Ausfahrschienenelement des ersten Ausfahrelements geführt. Das Ausfahrschienenelement des zweiten Ausfahrelements liegt ebenfalls in der ersten Ausfahrebene.

In einer Ausführungsform des linearen Transportsystems beziehungsweise der Weiche weist das lineare Transportsystem eine Hauptebene auf. Die Hauptebene ist durch das Einfahrmotormodul und das Einfahrschienenelement aufgespannt. Eine erste Ausfahrebene steht senkrecht auf der Hauptebene und ist durch das Ausfahrschienenelement des ersten Ausfahrelements geführt. Das Ausfahrschienenelement des zweiten Ausfahrelements liegt zumindest teilweise in einer zweiten Ausfahrebene, wobei die zweite Ausfahrebene parallel zu ersten Ausfahrebene ist und beabstandet zur ersten Ausfahrebene angeordnet ist. In dieser Ausführungsform sind also Ausfahrelemente in unterschiedlichen Ebenen vorgesehen.

In einer Ausführungsform des linearen Transportsystems beziehungsweise der Weiche weist die Wechselvorrichtung einen Antrieb auf. Mittels des Antriebs kann die Wechselvorrichtung in die erste Position und die zweite Position gebracht werden. Der Antrieb kann insbesondere das bewegliche Weichenelement antreiben.

In einer Ausführungsform des linearen Transportsystems beziehungsweise der Weiche sind das erste Austauschelement und das zweite Austauschelement auf einem rotierbaren Körper angeordnet. Mittels des Antriebs ist eine Rotation des rotierbaren Körpers auslösbar. Der rotierbare Körper kann Teil des beweglichen Weichenelements sein.

In einer Ausführungsform des linearen Transportsystems beziehungsweise der Weiche sind das erste Austauschelement und das zweite Austauschelement auf einer verschiebbaren Platte angeordnet. Mittels des Antriebs ist eine Verschiebung der verschiebbaren Platte auslösbar. Die verschiebbare Platte kann Teil des beweglichen Weichenelements sein.

In einer Ausführungsform des linearen Transportsystems beziehungsweise der Weiche schließt in der ersten Position das Einfahrmotormodul bündig an das Austauschmotormodul des ersten Austauschelements und das Austauschmotormodul des ersten Austauschelements bündig an das Ausfahrmotormodul des ersten Ausfahrelements an. In der zweiten Position schließt das Einfahrmotormodul bündig an das Austauschmotormodul des zweiten Austauschelements und das Austauschmotormodul des zweiten Austauschelements bündig an das Ausfahrmotormodul des zweiten Ausfahrelements an. So kann ein einfacher Übergang der beweglichen Einheit erreicht werden.

In einer Ausführungsform des linearen Transportsystems beziehungsweise der Weiche ist in der ersten Position zwischen dem Einfahrmotormodul und dem Austauschmotormodul des ersten Austauschelements ein Einfahrspalt mit einer vorgegebenen Einfahrspaltbreite angeordnet. Die Einfahrspaltbreite kann dabei insbesondere kleiner sein als ein Spulenabstand zwischen zwei Antriebsspulen der Motormodule.

In einer Ausführungsform des linearen Transportsystems beziehungsweise der Weiche ist in der ersten Position zwischen dem Austauschmotormodul des ersten Austauschelements und dem Ausfahrmotormodul des ersten Ausfahrelements ein Ausfahrspalt mit einer vorgegebenen Ausfahrspaltbreite angeordnet. Die Ausfahrspaltbreite kann dabei insbesondere kleiner sein als ein Spulenabstand zwischen zwei Antriebsspulen der Motormodule.

In einer Ausführungsform des linearen Transportsystems beziehungsweise der Weiche sind die Antriebsspulen innerhalb der Motormodule derart angeordnet, dass jeweils zwei Antriebsspulen einen vorgegebenen Abstand aufweisen. Eine in Fahrtrichtung hinten angeordnete Antriebsspule im Einfahrmotormodul und eine in Fahrtrichtung vorne angeordnete Antriebsspule im Austauschmotormodul des ersten Austauschelements weisen ebenfalls den vorgegebenen Abstand auf, wenn die Wechselvorrichtung in der ersten Position angeordnet ist. Die in Fahrtrichtung hinten angeordnete Antriebsspule im Einfahrmotormodul und eine in Fahrtrichtung vorne angeordnete Antriebsspule im Austauschmotormodul des zweiten Austauschelements weisen ebenfalls den vorgegebenen Abstand auf, wenn die Wechselvorrichtung in der zweiten Position angeordnet ist. Mit dieser Ausgestaltung kann insbesondere ein identischer Antriebsspulenabstand zwischen dem Einfahrmotormodul und den Austauschmotormodulen erreicht werden. Dieser Antriebsspulenabstand kann dem in den Motormodulen generell vorhandenen Antriebsspulenabstand entsprechen.

In einer Ausführungsform des linearen Transportsystems beziehungsweise der Weiche weisen eine in Fahrtrichtung hinten angeordnete Antriebsspule im Austauschmotormodul des ersten Austauschelements und eine in Fahrtrichtung vorne angeordnete Antriebsspule im Ausfahrmotormodul des ersten Ausfahrelements ebenfalls den vorgegebenen Abstand auf, wenn die Wechselvorrichtung in der ersten Position angeordnet ist. Eine in Fahrtrichtung hinten angeordnete Antriebsspule im Austauschmotormodul des zweiten Austauschelements und eine in Fahrtrichtung vorne angeordnete Antriebsspule im Ausfahrmotormodul des zweiten Ausfahrelements weisen ebenfalls den vorgegebenen Abstand auf, wenn die Wechselvorrichtung in der zweiten Position angeordnet ist. Mit dieser Ausgestaltung kann insbesondere ein identischer Antriebsspulenabstand zwischen den Austauschmotormodulen und den Ausfahrmotormodulen erreicht werden. Dieser Antriebsspulenabstand kann dem in den Motormodulen generell vorhandenen Antriebsspulenabstand entsprechen.

In einer Ausführungsform des linearen Transportsystems weist dieses ferner eine Steuereinheit auf. Die Steuereinheit ist eingerichtet, ein Steuerprogramm anhand einer Stellung der Wechselvorrichtung auszuwählen und ein logisches Weiterschalten von Antriebsspulen anhand der Stellung der Wechselvorrichtung vorzunehmen. Insbesondere kann die Steuereinheit auch zur Ausführung des erfindungsgemäßen Verfahrens eingerichtet sein. Darüber hinaus kann vorgesehen sein, dass die Steuereinheit generell eine Ansteuerung aller Motormodule beziehungsweise aller Antriebsspulen der Motormodule vornimmt.

In einer Ausführungsform des linearen Transportsystems ist die Steuereinheit eingerichtet, anhand von innerhalb der Motormodule angeordneten Positionsdetektoren eine Position der beweglichen Einheit zu bestimmen und anhand der Position der beweglichen Einheit und einer Stellung der Wechselvorrichtung die zum Antrieb der beweglichen Einheit anzusteuernden Antriebsspulen auszuwählen und eine Bestromung dieser anzusteuernden Antriebsspulen zu veranlassen.

In einer Ausführungsform des linearen Transportsystems ist die Steuereinheit ferner eingerichtet, ein logisches Weiterschalten von Positionsdetektoren anhand der Stellung der Wechselvorrichtung vorzunehmen. Das logische Weiterschalten der Positionsdetektoren kann dabei insbesondere beinhalten, dass in der ersten Position die Positionsdetektoren logisch vom Einfahrmotormodul über das Austauschmotormodul des ersten Austauschelements zum Ausfahrmotormodul des ersten Ausfahrelements und in der zweiten Position vom Einfahrmotormodul über das Austauschmotormodul des zweiten Austauschelements zum Ausfahrmotormodul des zweiten Ausfahrelements geschalten werden. Dadurch kann eine durchgehende Positionserfassung der beweglichen Einheit beim Durchfahren der Weiche erreicht werden.

In der ersten Position der Wechselvorrichtung kann vorgesehen sein, dass die Positionsdetektoren des Austauschmotormoduls des zweiten Austauschelements deaktiviert sind. In der zweiten Position der Wechselvorrichtung kann vorgesehen sein, dass die Positionsdetektoren des Austauschmotormoduls des ersten Austauschelements deaktiviert sind. Alternativ kann jedoch auch vorgesehen sein, diese Positionsdetektoren aktiviert zu lassen, beispielsweise wenn bewegliche Einheiten an den entsprechenden Austauschelementen angeordnet sind. Dadurch können beispielsweise bewegliche Einheiten an denjenigen Austauschelementen angeordnet sein, die nicht mehr mit dem Einfahrelement und/oder einem der Ausfahrelemente verbunden sind. Um ein Halten und/oder Positionieren der beweglichen Einheit an einem solchen Austauschelement steuern zu können, können jedoch die zugehörigen Positionsdetektoren aktiviert bleiben.

In einer Ausführungsform des linearen Transportsystems ist die Steuereinheit eingerichtet, zu überprüfen, ob die Wechselvorrichtung in der ersten Position oder in der zweiten Position oder einer Zwischenposition ist. Die Steuereinheit ist ferner eingerichtet, in der ersten Position eine Bestromung der Antriebsspulen des Austauschmotormoduls des zweiten Austauschelements und des Ausfahrmotormoduls des zweiten Ausfahrelements zu verhindern. Die Steuereinheit ist ferner eingerichtet, in der zweiten Position eine Bestromung der Antriebsspulen des Austauschmotormoduls des ersten Austauschelements und des Ausfahrmotormoduls des ersten Ausfahrelements zu verhindern. Die Steuereinheit ist ferner eingerichtet, in der Zwischenposition eine Bestromung der Antriebsspulen des Einfahrmotormoduls des Einfahrelements, des Austauschmotormoduls des ersten Austauschelements, des Ausfahrmotormoduls des ersten Ausfahrelements, des Austauschmotormoduls des zweiten Austauschelements und des Ausfahrmotormoduls des zweiten Ausfahrelements zu verhindern. So kann ein sicherer Betrieb des linearen Transportsystems erreicht werden.

In einer Ausführungsform des Verfahrens zum Betreiben des linearen Transportsystems wird zusätzlich eine Position der beweglichen Einheit mittels innerhalb der Motormodule angeordneten Positionsdetektoren bestimmt. Ferner werden anzusteuernde Antriebsspulen anhand der Stellung und der Position der beweglichen Einheit ausgewählt. Außerdem werden diese anzusteuernden Antriebsspulen bestromt.

In einer Ausführungsform des Verfahrens zum Betreiben des linearen Transportsystems erfolgt ein logisches Weiterschalten von Positionsdetektoren anhand der Stellung der Wechselvorrichtung. Das logische Weiterschalten der Positionsdetektoren kann dabei insbesondere beinhalten, dass in der ersten Position die Positionsdetektoren logisch vom Einfahrmotormodul über das Austauschmotormodul des ersten Austauschelements zum Ausfahrmotormodul des ersten Ausfahrelements und in der zweiten Position vom Einfahrmotormodul über das Austauschmotormodul des zweiten Austauschelements zum Ausfahrmotormodul des zweiten Ausfahrelements geschalten werden. Dadurch kann eine durchgehende Positionserfassung der beweglichen Einheit beim Durchfahren der Weiche erreicht werden.

In der ersten Position der Wechselvorrichtung kann vorgesehen sein, dass die Positionsdetektoren des Austauschmotormoduls des zweiten Austauschelements deaktiviert sind. In der zweiten Position der Wechselvorrichtung kann vorgesehen sein, dass die Positionsdetektoren des Austauschmotormoduls des ersten Austauschelements deaktiviert sind. Alternativ kann jedoch auch vorgesehen sein, diese Positionsdetektoren aktiviert zu lassen, beispielsweise wenn bewegliche Einheiten an den entsprechenden Austauschelementen angeordnet sind. Dadurch können beispielsweise bewegliche Einheiten an denjenigen Austauschelementen angeordnet sein, die nicht mehr mit dem Einfahrelement und/oder einem der Ausfahrelemente verbunden sind. Um ein Halten und/oder Positionieren der beweglichen Einheit an einem solchen Austauschelement steuern zu können, können jedoch die zugehörigen Positionsdetektoren aktiviert bleiben.

In einer Ausführungsform des Verfahrens zum Betreiben des linearen Transportsystems wird überprüft, ob die Wechselvorrichtung in der ersten Position oder in der zweiten Position oder einer Zwischenposition ist. In der ersten Position wird eine Bestromung der Antriebsspulen des Austauschmotormoduls des zweiten Austauschelements und des Ausfahrmotormoduls des zweiten Ausfahrelements verhindert. In der zweiten Position wird eine Bestromung der Antriebsspulen des Austauschmotormoduls des ersten Austauschelements und des Ausfahrmotormoduls des ersten Ausfahrelements verhindert. In der Zwischenposition wird eine Bestromung der Antriebsspulen des Einfahrmotormoduls des Einfahrelements, des Austauschmotormoduls des ersten Austauschelements, des Ausfahrmotormoduls des ersten Ausfahrelements, des Austauschmotormoduls des zweiten Austauschelements und des Ausfahrmotormoduls des zweiten Ausfahrelements verhindert.

Die Erfindung wird anhand der beigefügten Figuren näher erläutert. Hierbei zeigen:
- Fig. 1: eine isometrische Ansicht eines linearen Transportsystems;
- Fig. 2: einen Querschnitt des linearen Transportsystems der Fig. 1;
- Fig. 3: eine isometrische Ansicht eines ersten Ausführungsbeispiels einer Weiche eines linearen Transportsystems in einer ersten Position;
- Fig. 4: eine isometrische Ansicht der Weiche gemäß Fig. 3 in einer zweiten Position;
- Fig. 5: eine isometrische Ansicht eines zweiten Ausführungsbeispiels einer Weiche eines linearen Transportsystems in einer ersten Position;
- Fig. 6: eine isometrische Ansicht der Weiche gemäß Fig. 5 in einer zweiten Position;
- Fig. 7: eine isometrische Ansicht eines dritten Ausführungsbeispiels einer Weiche eines linearen Transportsystems in einer ersten Position;
- Fig. 8: eine isometrische Ansicht der Weiche gemäß Fig. 7 in einer zweiten Position;
- Fig. 9: eine isometrische Ansicht der Weiche gemäß Fig. 7 in einer dritten Position;
- Fig. 10: eine isometrische Ansicht der Weiche gemäß Fig. 7 in einer vierten Position;
- Fig. 11: eine Seitenansicht der Weiche gemäß Fig. 10;
- Fig. 12: eine isometrische Ansicht der Weiche gemäß Fig. 7 in einer fünften Position;
- Fig. 13: eine isometrische Ansicht eines vierten Ausführungsbeispiels einer Weiche eines linearen Transportsystems in einer ersten Position;
- Fig. 14: eine isometrische Ansicht der Weiche gemäß Fig. 13 in einer zweiten Position;
- Fig. 15: eine isometrische Ansicht der Weiche gemäß Fig. 13 in einer dritten Position;
- Fig. 16: eine isometrische Ansicht der Weiche gemäß Fig. 13 in einer vierten Position;
- Fig. 17: eine isometrische Ansicht der Weiche gemäß Fig. 13 in einer fünften Position; und
- Fig. 18: ein Ablaufdiagramm eines Verfahrens zum Betreiben eines linearen Transportsystems.

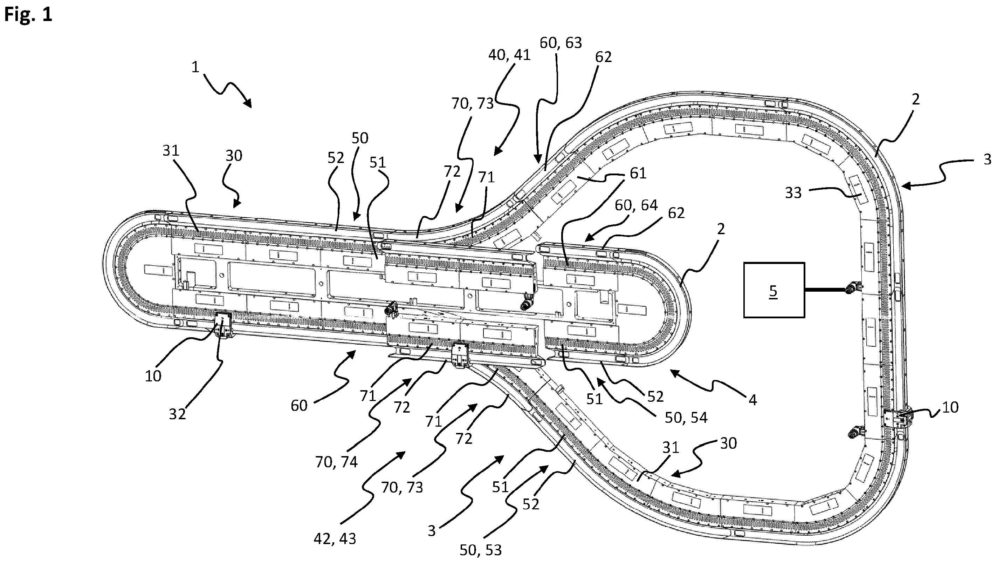

Fig. 1 zeigt ein lineares Transportsystem 1 mit einer beweglichen Einheit 10, einer Führungsschiene 2 zum Führen der beweglichen Einheit 10 sowie einem Linearmotor 30 zum Antreiben der beweglichen Einheit 10 entlang der Führungsschiene 2. Der Linearmotor 30 umfasst einen Stator 31 und einen Läufer 32. Der Stator 31 weist mehrere entlang der Führungsschiene 2 stationär angeordnete Motormodule 33 auf. Die Führungsschiene 2 ist an den Motormodulen 33 angeordnet. Das lineare Transportsystem 1 weist zumindest eine Weiche 40 auf. Die Weiche 40 weist zumindest ein statisches Einfahrelement 50 mit einem Einfahrmotormodul 51 und einem zur Führungsschiene 2 gehörigen Einfahrschienenelement 52 auf. Die Weiche 40 weist ferner zumindest zwei statische Ausfahrelemente 60 mit jeweils einem Ausfahrmotormodul 61 und jeweils einem zur Führungsschiene 2 gehörigen Ausfahrschienenelement 62 auf. Ferner weist die Weiche 40 eine Wechselvorrichtung 41 auf. Die Wechselvorrichtung 41 weist zwei Austauschelemente 70 mit jeweils einem Austauschmotormodul 71 und jeweils einem zur Führungsschiene 2 gehörigen Austauschschienenelement 72 auf. In einer ersten Position der Wechselvorrichtung 41 ist das Einfahrelement 50 über ein erstes Austauschelement 73 mit einem ersten Ausfahrelement 63 verbunden. Die erste Position ist dabei in Fig. 1 gezeigt. In einer zweiten Position (nicht in Fig. 1 gezeigt) der Wechselvorrichtung 41 ist das Einfahrelement 50 über ein zweites Austauschelement 74 mit einem zweiten Ausfahrelement 64 verbunden.

Das erste Austauschelement 73 und das zweite Austauschelement 74 können dabei zwischen dem Einfahrelement 50 und dem ersten Ausfahrelement 63 beziehungsweise dem zweiten Ausfahrelement 64 ausgetauscht werden. Die bewegliche Einheit 10 kann insbesondere die Weiche 40 über das Einfahrelement 50 erreichen und dann entweder über das erste Austauschelement 73 zum ersten Ausfahrelement 63 oder über das zweite Austauschelement 74 zum zweiten Ausfahrelement 64 gelangen. Dadurch kann beispielsweise ein Produktstrom geteilt werden und so verschiedene Produkte zu verschiedenen Bearbeitungsstationen (nicht in Fig. 1 gezeigt) geführt werden. Insgesamt ergibt sich so ein deutlich flexibleres lineares Transportsystem 1.

Die bewegliche Einheit 10 kann dabei entlang der Führungsschiene 2 bewegt werden. Abhängig von der Position der Wechselvorrichtung 41 ist es dabei möglich, die bewegliche Einheit 10 in unterschiedliche Bereiche, insbesondere einen ersten Bereich 3 und einen zweiten Bereich 4 zu bewegen. Insbesondere kann vorgesehen sein, dass die bewegliche Einheit 10 im linearen Transportsystem 1 im Uhrzeigersinn bewegt wird. Das lineare Transportsystem 1 weist eine geschlossene Führungsschiene 2 auf, so dass die bewegliche Einheit 10 immer wieder in ihre Ausgangsposition bewegt werden kann. Die Bewegung der beweglichen Einheit 10 im linearen Transportsystem 1 im Uhrzeigersinn kann insbesondere den Richtungsangaben dienen, die im Folgenden für die Stellungen der Weiche 40 beziehungsweise für die Positionen der Wechselvorrichtung 41 verwendet werden. Selbstverständlich ist es ebenso möglich, die bewegliche Einheit 10 im linearen Transportsystem 1 gegen den Uhrzeigersinn zu bewegen oder sogar nach Abbremsung der beweglichen Einheit 10 eine Bewegungsrichtungsumkehr auszuführen. Im ersten Bereich 3 können beispielsweise andere Bearbeitungsstationen vorgesehen sein als im zweiten Bereich 4.

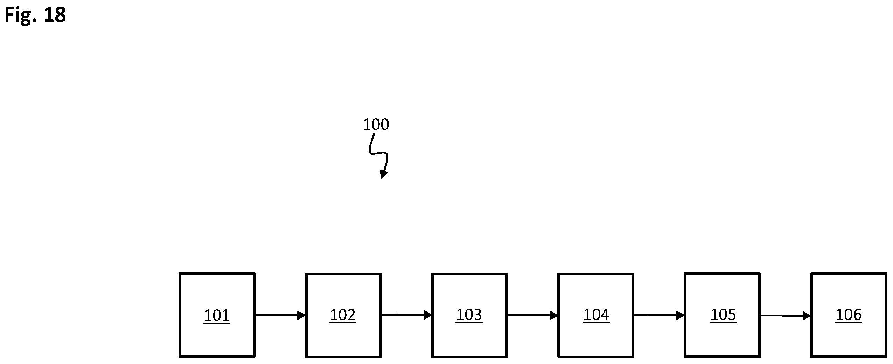

Fig. 1 weist ferner eine optionale Steuereinheit 5 auf. Die Steuereinheit 5 kann eingerichtet sein, ein Verfahren zum Betreiben des linearen Transportsystems 1 zu steuern. Die Steuereinheit 5 kann hierzu eingerichtet sein, den Linearmotor 30 anzusteuern und eine Bewegung der beweglichen Einheit 10 auszulösen. Ferner kann die Steuereinheit 5 eingerichtet sein, eine Ansteuerung der Weiche 40 zu übernehmen. Einzelheiten der Steuereinheit 5 beziehungsweise eines Steuerverfahrens, das mit der Steuereinheit 5 ausgeführt werden kann, werden beispielsweise im Zusammenhang mit Fig. 18 erläutert.

Es kann vorgesehen sein, dass die Steuereinheit 5 mit allen Motormodulen 30, also insbesondere auch mit den Austauschmotormodulen 71 des ersten Austauschelements 73 beziehungsweise des zweiten Austauschelements 74 und den Motormodulen 30 des zweiten Bereichs 4 derart verbunden ist, dass eine Datenkommunikation zwischen der Steuereinheit 5 und allen Motormodulen 30 möglich ist, beispielsweise um Positionsdetektordaten und/oder weitere Sensor- und/oder Systemdaten von den Motormodulen 30 zur Steuereinheit 5 zu senden und/oder um beispielweise Ansteuersignale für die Spulen der Motormodule 30 und/oder weitere Daten von der Steuereinheit 5 zu den Motormodulen 30 zu senden. Insbesondere ist also eine Datenkommunikation zwischen der Steuereinheit 5 und den Austauschmotormodulen 71 des ersten Austauschelements 73 beziehungsweise des zweiten Austauschelements 74 und den Motormodulen 30 des zweiten Bereichs 4 möglich, ohne dass entsprechende Verbindungen in Fig. 1 gezeigt sind. Die Verbindungen können kabelgebunden oder drahtlos sein. Ebenso kann vorgesehen sein, dass alle Motormodule 30 zu allen Zeiten mit einer Energieversorgung verbunden sind, um eine Bestromung der Antriebsspulen zu ermöglichen.

Insbesondere kann vorgesehen sein, dass die Austauschmotormodule 71 des ersten Austauschelements 73 beziehungsweise des zweiten Austauschelements 74 ständig mit der Steuereinheit 5 zum Zwecke eines Datenaustauschs verbunden sind und ebenso ständig mit Energie versorgt werden, unabhängig von einer Position der Wechselvorrichtung 41.

Auch bei den im Folgenden beschriebenen Weichen können entsprechende Datenverbindungen eine entsprechende Energieversorgung vorgesehen sein.

In Fig. 1 ist ferner eine weitere Weiche 42 gezeigt. Die weitere Weiche 42 weist eine weitere Wechselvorrichtung 43 auf. Die weitere Weiche 42 weist mehrere Einfahrelemente, insbesondere ein erstes Einfahrelement 53 und ein zweites Einfahrelement 54 auf. Das erste Einfahrelement 53 weist ein Einfahrmotormodul 51 und ein zur Führungsschiene 2 gehörendes Einfahrschienenelement 52 auf. Das zweite Einfahrelement 54 weist ebenfalls ein Einfahrmotormodul 51 und ein zur Führungsschiene 2 gehörendes Einfahrschienenelement 52 auf. Die weitere Wechselvorrichtung 43 weist zwei Austauschelemente 70 mit jeweils einem Austauschmotormodul 71 und jeweils einem zur Führungsschiene 2 gehörigen Austauschschienenelement 72 auf. In einer ersten Position der weiteren Wechselvorrichtung 43 ist das erste Einfahrelement 53 über ein erstes Austauschelement 73 mit einem Ausfahrelement 60 verbunden. Die erste Position ist dabei in Fig. 1 gezeigt. In einer zweiten Position (nicht in Fig. 1 gezeigt) der weiteren Wechselvorrichtung 43 ist das zweite Einfahrelement 54 über ein zweites Austauschelement 74 mit dem Ausfahrelement 60 verbunden.

Das erste Austauschelement 73 und das zweite Austauschelement 74 können dabei zwischen dem ersten Einfahrelement 53 beziehungsweise dem zweiten Einfahrelement 54 und dem Ausfahrelement 60 ausgetauscht werden. Die bewegliche Einheit 10 kann insbesondere die weitere Weiche 42 entweder über das erste Einfahrelement 53 oder über das zweite Einfahrelement 54 erreichen und dann entweder über das erste Austauschelement 73 oder über das zweite Austauschelement 74 zum Ausfahrelement 60 gelangen. Dadurch kann der mittels der Weiche 40 aufgeteilte Produktstrom mittels der weiteren Weiche 42 wieder zusammengeführt werden.

Es kann vorgesehen sein, dass die bewegliche Einheit 10 entgegen dem Uhrzeigersinn bewegt wird. In diesem Fall kann der Produktstrom über die weitere Weiche 42 aufgeteilt und über die Weiche 40 wieder zusammengeführt werden. Ferner können Weichen 40 mit mehr als einem Einfahrelement 50 oder weitere Weichen 42 mit mehr als einem Ausfahrelement 60 vorgesehen sein. Die Begriffe Einfahrelement 50 und Ausfahrelement 60 beziehen sich auf die in Fig. 1 willkürlich gewählte Fahrtrichtung der beweglichen Einheit 10 im Uhrzeigersinn. Die bewegliche Einheit 10 ist jedoch in beide Richtungen bewegbar. Ferner kann mehr als eine bewegliche Einheit 10 im linearen Transportsystem 1 vorgesehen sein.

Die Erfindung betrifft ferner die Weiche 40 mit den im Zusammenhang mit den Fig. 1 erläuterten Merkmalen. Die Erfindung betrifft ferner die weitere Weiche 42 mit den im Zusammenhang mit den Fig. 1 erläuterten Merkmalen.

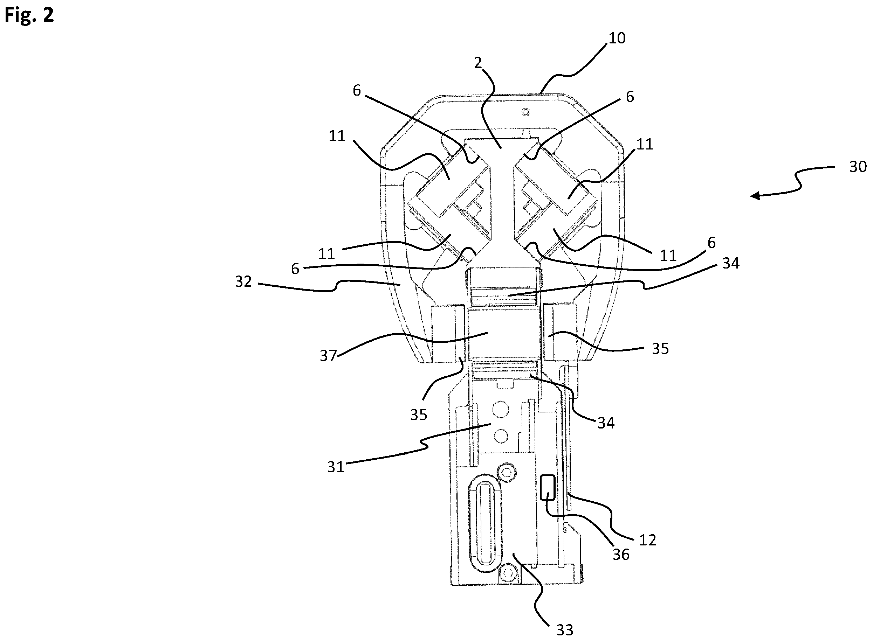

Fig. 2 zeigt einen Querschnitt durch das lineare Transportsystem 1. Der Querschnitt ist dabei insbesondere durch eines der Motormodule 33 und die bewegliche Einheit 10 geführt. Zur besseren Darstellung wurde auf eine Schraffierung von eventuellen Schnittflächen verzichtet. Innerhalb der Motormodule 33 sind Antriebsspulen 34 des Stators des Linearmotors 30 angeordnet, die jeweils um einen Statorzahn 37 gewickelt sind. Zusätzlich kann zwischen zwei Antriebsspulen 34 jeweils ein weiterer Statorzahn 37 vorgesehen sein. Insbesondere können jeweils mehrere Antriebsspulen 34 pro Motormodul angeordnet sein. Der Läufer 32 ist an der beweglichen Einheit 10 angeordnet und umfasst mehrere Magnete 35. Der Linearmotor 30 kann wie in dem von der Beckhoff Automation GmbH & Co KG unter dem Markennamen "XTS" vertriebenen linearen Transportsystem 1 ausgestaltet sein. Optional in Fig. 2 gezeigt ist, dass die Führungsschiene 2 Abrollflächen 6 aufweist. Rollen 11 der beweglichen Einheit 10 können an den Abrollflächen 6 abrollen und so kann eine Führung der beweglichen Einheit 10 entlang der Führungsschiene 2 erreicht werden.

Ebenfalls in Fig. 2 gezeigt ist ein optionaler Positionsdetektor 36 des Motormoduls 33. Mit einem Signal des Positionsdetektors 36 kann eine Position der beweglichen Einheit 10 bestimmt werden. Hierzu kann es vorgesehen sein, dass die bewegliche Einheit 10 ein Positionselement 12 aufweist. Eine Anwesenheit des Positionselements 12 kann vom Positionsdetektor 36 detektiert werden. Beispielsweise kann das Positionselement 12 ein Positionsmagnet oder eine andere mittels des Positionsdetektors 36 erfassbare Einheit sein. sein. Der Positionsdetektor 36 kann in diesem Fall ein Magnetfeldsensor, beispielweise ein Hall-Sensor, sein. Es ist ebenso möglich, mittels des Positionsdetektors 36 eine Position der beweglichen Einheit 10 anhand eines Magnetfelds der Magneten 35 des Läufers 32 zu bestimmen. Hierzu kann der Positionsdetektor 36 gegebenenfalls an einer anderen Position innerhalb des Motormoduls 33 angeordnet sein.

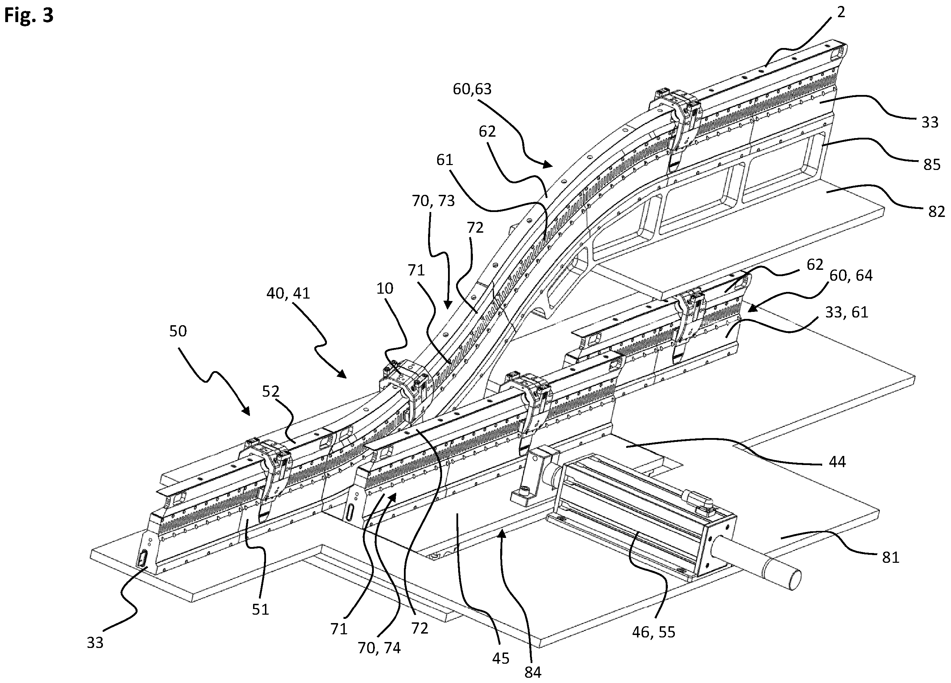

Fig. 3 zeigt eine isometrische Ansicht eines Ausführungsbeispiels einer Weiche 40, die im linearen Transportsystems 1 der Fig. 1 und 2 eingesetzt werden kann. Insbesondere weist diese Weiche 40 wieder das Einfahrelement 50 mit dem Einfahrmotormodul 51 und dem Einfahrschienenelement 52 sowie die Ausfahrelemente 60 mit den jeweiligen Ausfahrmotormodulen 61 und Ausfahrschienenelementen 62 auf. Die Wechselvorrichtung 41 weist ein bewegliches Weichenelement 44 auf. Das bewegliche Weichenelement 44 ist in diesem Ausführungsbeispiel optional als verschiebbare Platte 45 ausgestaltet. Das erste Austauschelement 73 mit dem zugehörigen Austauschmotormodul 71 und Austauschschienenelement 72 ist fest mit dem beweglichen Weichenelement 44 verbunden. Das zweite Austauschelement 74 mit dem zugehörigen Austauschmotormodul 71 und Austauschschienenelement 72 ist ebenfalls fest mit dem beweglichen Weichenelement 44 verbunden. Insbesondere können die Austauschmotormodule 71 des ersten Austauschelements 73 beziehungsweise des zweiten Austauschelements 74 am beweglichen Weichenelement 44 befestigt sein. Das bewegliche Weichenelement 44 kann insbesondere dazu dienen, das erste Austauschelement 73 beziehungsweise die Wechselvorrichtung 41 in die erste Position und das zweite Austauschelement 74 beziehungsweise die Wechselvorrichtung 41 in die zweite Position zu bringen. In Fig. 3 ist die erste Position dargestellt. Das Einfahrelement 50 ist über das erste Austauschelement 73 mit dem ersten Ausfahrelement 63 verbunden.

Ferner ist in Fig. 3 eine bewegliche Einheit 10 gezeigt, die gerade über das erste Austauschelement 73 bewegt wird.

Es kann vorgesehen sein, dass die Steuereinheit 5 mit allen Motormodulen 30, also insbesondere auch mit den Austauschmotormodulen 71 des ersten Austauschelements 73 beziehungsweise des zweiten Austauschelements 74 und den Ausfahrmotormodulen 61 des ersten Ausfahrelements 63 beziehungsweise des zweiten Ausfahrelements ständig derart verbunden ist, dass eine Datenkommunikation zwischen der Steuereinheit 5 und allen Motormodulen 30 möglich ist, beispielsweise um Positionsdetektordaten und/oder weitere Sensor- und/oder Systemdaten von den Motormodulen 30 zur Steuereinheit 5 zu senden und/oder um beispielweise Ansteuersignale für die Spulen der Motormodule 30 und/oder weitere Daten von der Steuereinheit 5 zu den Motormodulen 30 zu senden. Insbesondere ist also eine Datenkommunikation zwischen der Steuereinheit 5 und den Austauschmotormodulen 71 des ersten Austauschelements 73 beziehungsweise des zweiten Austauschelements 74 möglich, ohne dass entsprechende Verbindungen in Fig. 3 gezeigt sind. Die Verbindungen können kabelgebunden oder drahtlos sein. Kabelgebundene Verbindungen können dabei über die verschiebbare Platte 45 geführt sein. Ebenso kann vorgesehen sein, dass alle Motormodule 30 zu allen Zeiten mit einer Energieversorgung verbunden sind, um eine Bestromung der Antriebsspulen zu ermöglichen. Auch die Energieversorgung kann über die verschiebbare Platte 45 geführt sein.

Insbesondere kann vorgesehen sein, dass die Austauschmotormodule 71 des ersten Austauschelements 73 beziehungsweise des zweiten Austauschelements 74 ständig mit der Steuereinheit 5 zum Zwecke eines Datenaustauschs verbunden sind und ebenso ständig mit Energie versorgt werden, unabhängig von einer Position der Wechselvorrichtung 41.

Im Ausführungsbeispiel der Weiche 40, die im linearen Transportsystem 1 der Fig. 1 und 2 eingesetzt werden kann, weist die Wechselvorrichtung 41 einen Antrieb 46 auf. Mittels des Antriebs 46 kann die Wechselvorrichtung 41 in die erste Position und die zweite Position gebracht werden. Der Antrieb 46 kann insbesondere das bewegliche Weichenelement 44 antreiben. Mittels des Antriebs 46 kann also die verschiebbare Platte 45 verschoben werden. Die verschiebbare Platte 45 kann Teil des beweglichen Weichenelements 44 sein. In der dargestellten Ausführungsform ist der Antrieb 46 als ein Linearantrieb 55, den man auch als Linearachse bezeichnen kann, ausgebildet. Somit kann mittels des Linearantriebs 55 sehr einfach, positionsgenau, schnell und effizient eine translatorische Verschiebung der verschiebbaren Platte 45 ohne weitere zwischengeschaltete mechanische Getriebe erfolgen.

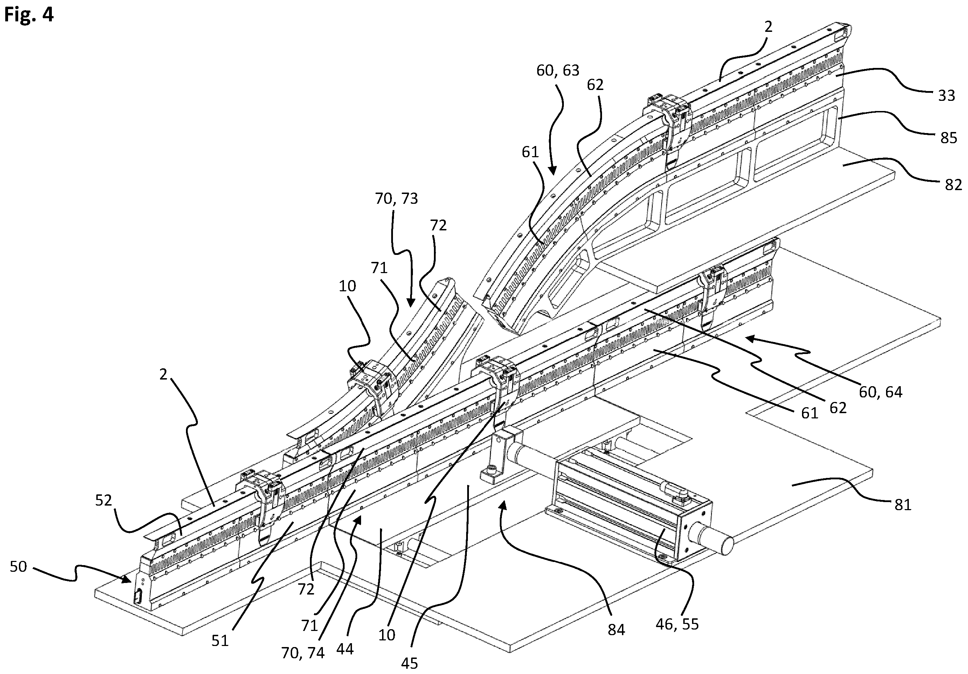

Fig. 4 zeigt eine isometrische Ansicht der Weiche 40 der Fig. 3, bei der die Wechselvorrichtung 41 in die zweite Position gebracht wurde. Das Einfahrelement 50 ist nun über das zweite Austauschelement 74 mit dem zweiten Ausfahrelement 64 verbunden.

Ferner ist in Fig. 4 eine bewegliche Einheit 10 gezeigt, die gerade über das zweite Austauschelement 74 bewegt wird.

Die in den Fig. 3 und 4 gezeigte Weiche 40 kann direkt als Weiche 40 im linearen Transportsystem 1 der Fig. 1 und 2 eingesetzt werden.

Im Ausführungsbeispiel der Weiche 40 der Fig. 3 und 4 ist das erste Austauschelement 73 gebogen ausgebildet. Insbesondere sind das Austauschmotormodul 71 und das Austauschschienenelement 72 des ersten Austauschelements 73 jeweils gebogen ausgebildet und das Ausfahrmotormodul 61 und das Ausfahrschienenelement 62 des ersten Ausfahrelements 63 sind ebenfalls jeweils gebogen ausgebildet. Ferner ist im Ausführungsbeispiel der Weiche 40 der Fig. 3 und 4 das zweite Austauschelement 74 linear ausgebildet. Insbesondere sind das Austauschmotormodul 71 und das Austauschschienenelement 72 des zweiten Austauschelements 74 jeweils linear ausgebildet. Das Einfahrelement 50 und das zweite Ausfahrelement 64 sind also fluchtend angeordnet, so dass das lineare zweite Austauschelement 74 eine Verbindung des Einfahrelements 50 und des zweiten Ausfahrelements 64 herstellen kann. Diese Ausgestaltung ist in den Fig. 3 und 4 ebenfalls gezeigt.

Im Ausführungsbeispiel der Weiche 40 der Fig. 3 und 4 weist das lineare Transportsystem 1 eine Hauptebene auf. Die Hauptebene ist durch das Einfahrmotormodul 51 und das Einfahrschienenelement 52 aufgespannt. Die Hauptebene kann insbesondere senkrecht zu einer ersten Befestigungsplatte 81 sein, auf der das Einfahrmotormodul 51 und das Ausfahrmotormodul 61 des zweiten Ausfahrelements 64 angeordnet sind. Insbesondere kann vorgesehen sein, dass alle unbeweglichen Motormodule 33 inklusive dem Einfahrmotormodul 51 und den Ausfahrmotormodulen 61 in der Hauptebene angeordnet sind. Eine solche Ausgestaltung ist in Fig. 1 beispielhaft gezeigt. Eine erste Ausfahrebene steht senkrecht auf der Hauptebene und ist durch das Ausfahrschienenelement 62 des ersten Ausfahrelements 63 geführt. Die erste Ausfahrebene ist parallel zu ersten Befestigungsplatte 81 Das Ausfahrschienenelement 62 des zweiten Ausfahrelements 64 liegt zumindest teilweise in einer zweiten Ausfahrebene, wobei die zweite Ausfahrebene parallel zu ersten Ausfahrebene und damit auch parallel zur ersten Befestigungsplatte 81 ist und beabstandet zur ersten Ausfahrebene angeordnet ist. In dieser Ausführungsform sind das erste Ausfahrelement 63 und das zweite Ausfahrelement 64 in unterschiedlichen Ebenen vorgesehen. Dies ist in den Fig. 3 und 4 gezeigt. Hier ist das erste Ausfahrelement 63 oberhalb des zweiten Ausfahrelements 64 angeordnet.

Im Ausführungsbeispiel der Weiche 40 der Fig. 3 und 4 ist die erste Befestigungsplatte 81 vorgesehen, auf der das Einfahrelement 50 und das zweite Ausfahrelement 64 angeordnet sind. Eine Ausnehmung 84 in der ersten Befestigungsplatte 81 dient einer Aufnahme der verschiebbaren Platte 45. Die verschiebbare Platte 45 kann also in der Ausnehmung 84 angeordnet sein. Der Antrieb 46 ist ebenfalls auf der ersten Befestigungsplatte 81 angeordnet. Die erste Befestigungsplatte 81 kann dabei senkrecht zur oben beschriebenen Hauptebene stehen. Eine zweite Befestigungsplatte 82 ist parallel zu ersten Befestigungsplatte 81 angeordnet. Das erste Ausfahrelement 63 ist auf der zweiten Befestigungsplatte 82 befestigt, wobei hier ein optionales Stützelement 85 vorgesehen ist, mit dem ein Abstand zwischen der zweiten Befestigungsplatte 82 und dem ersten Ausfahrelement 63 eingestellt werden kann. Die verschiebbare Platte 45 kann insbesondere in einem Winkel zur Hauptebene bewegt werden. Insbesondere wird die verschiebbare Platte 45 senkrecht zur Hauptebene bewegt. Eine Ebene, die senkrecht auf die Hauptebene steht und die durch das Einfahrschienenelement 52 geführt ist, kann als Einfahrebene bezeichnet werden.

Das erste Austauschelement 73 ist aus einer Ebene der ersten Befestigungsplatte 81 heraus gebogen, um das an der zweiten Befestigungsplatte 82 angeordnete erste Ausfahrelement 63 erreichen zu können. Mittels des ersten Austauschelements 73 wird also die Einfahrebene verlassen. Das zweite Austauschelement 74 ist linear, um das zweite Ausfahrelement 64 erreichen zu können.

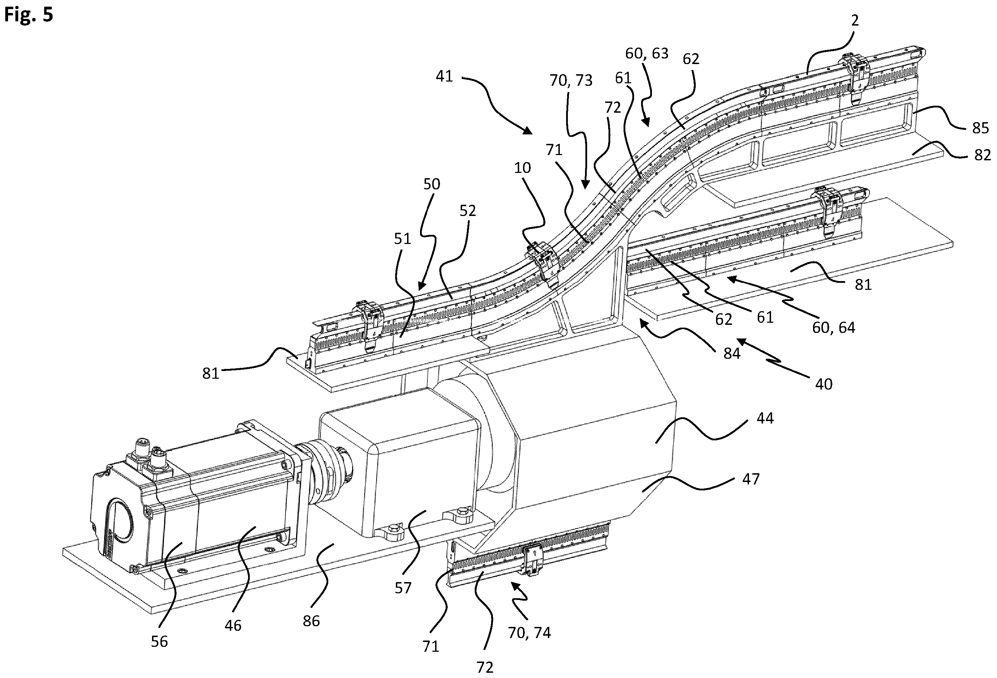

Fig. 5 zeigt eine isometrische Ansicht eines weiteren Ausführungsbeispiels einer Weiche 40, die im linearen Transportsystems 1 der Fig. 1 und 2 eingesetzt werden kann. Insbesondere weist diese Weiche 40 wieder das Einfahrelement 50 mit dem Einfahrmotormodul 51 und dem Einfahrschienenelement 52 sowie die Ausfahrelemente 60 mit den jeweiligen Ausfahrmotormodulen 61 und Ausfahrschienenelementen 62 auf. Die Wechselvorrichtung 41 weist ein bewegliches Weichenelement 44 auf. Das bewegliche Weichenelement 44 ist in diesem Ausführungsbeispiel, im Unterschied zu dem Ausführungsbeispiel gemäß den Fig. 3 und Fig. 4, als rotierbarer Körper 47 ausgestaltet. Das erste Austauschelement 73 mit dem zugehörigen Austauschmotormodul 71 und Austauschschienenelement 72 ist fest mit dem beweglichen Weichenelement 44 verbunden. Das zweite Austauschelement 74 mit dem zugehörigen Austauschmotormodul 71 und Austauschschienenelement 72 ist fest mit dem beweglichen Weichenelement 44 verbunden. Insbesondere können die Austauschmotormodule 71 des ersten Austauschelements 73 beziehungsweise des zweiten Austauschelements 74 am beweglichen Weichenelement 44 befestigt sein. Das bewegliche Weichenelement 44 kann insbesondere dazu dienen, das erste Austauschelement 73 beziehungsweise die Wechselvorrichtung 41 in die erste Position und das zweite Austauschelement 74 beziehungsweise die Wechselvorrichtung 41 in die zweite Position zu bringen. In Fig. 5 ist die erste Position dargestellt. Das Einfahrelement 50 ist über das erste Austauschelement 73 mit dem ersten Ausfahrelement 63 verbunden.

Die Weiche 40 der Fig. 5 weist ebenfalls einen Antrieb 46 auf. Mittels des Antriebs 46 kann die Wechselvorrichtung 41 in die erste Position und die zweite Position gebracht werden. Der Antrieb 46 kann insbesondere das bewegliche Weichenelement 41 antreiben. Mittels des Antriebs 46 kann also der rotierbare Körper 47 rotiert werden. Der rotierbare Körper 47 kann Teil des beweglichen Weichenelements 41 sein. In der dargestellten Ausführungsform ist der Antrieb 46 als ein Rotationsantrieb 56 ausgebildet. Optional, wie auch hier dargestellt, kann zwischen dem Rotationsantrieb 56 und dem rotierbaren Körper 47 ein Getriebe 57 zwischengeschaltet sein. Somit kann mittels des Rotationsantriebs 56 und dem optional vorhandenen Getriebes 57 sehr einfach, positionsgenau, schnell und effizient eine rotatorische Verdrehung des rotierbaren Körpers 47 zwischen der ersten Position und der zweiten Position erfolgen.

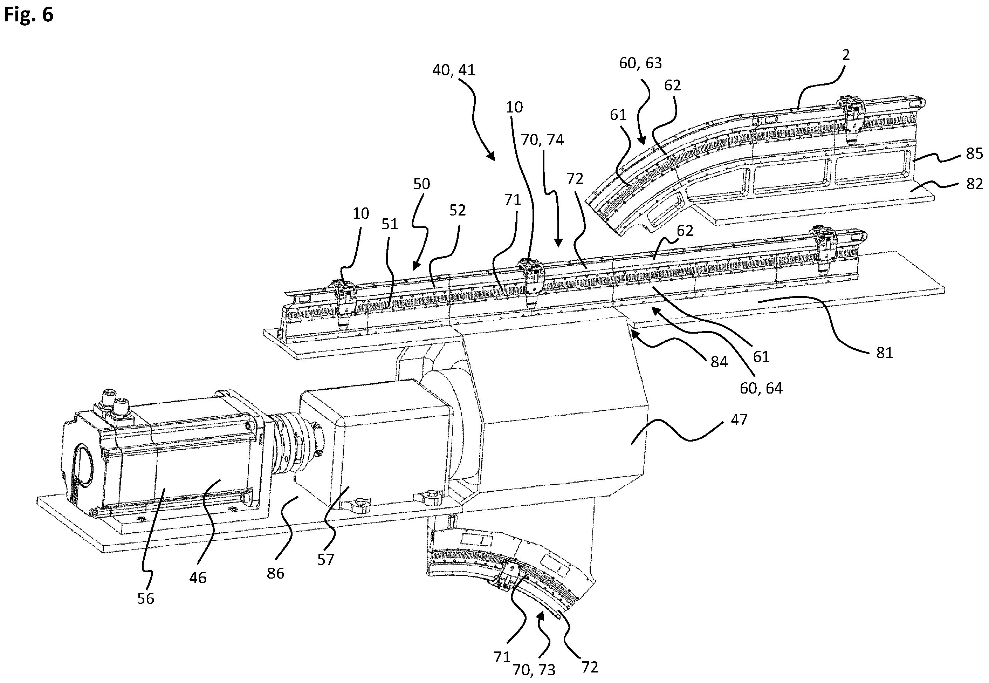

Fig. 6 zeigt eine isometrische Ansicht der Weiche 40 der Fig. 5, bei der die Wechselvorrichtung 41 in die zweite Position gebracht wurde. Das Einfahrelement 50 ist nun über das zweite Austauschelement 74 mit dem zweiten Ausfahrelement 64 verbunden.

Bei der Weiche 40 der Fig. 5 und 6 sind die Austauschelemente 70 also auf einem rotierbaren Körper 47 angeordnet. Dabei ist vorgesehen, dass sich das erste Austauschelement 73 und das zweite Austauschelement 74 auf dem rotierbaren Körper 47 gegenüberliegen. Die Austauschelemente 70 können jedoch auch in einem anderen Winkel zueinander angeordnet sein, um eine zum Wechsel der Austauschelemente 70 notwendige Rotation des rotierbaren Körpers 47 zu verkleinern.

Es kann vorgesehen sein, dass bei der Weiche 40 der Fig. 5 und 6 die Steuereinheit 5 mit allen Motormodulen 30, also insbesondere auch mit den Austauschmotormodulen 71 des ersten Austauschelements 73 beziehungsweise des zweiten Austauschelements 74 und den Ausfahrmotormodulen 61 des ersten Ausfahrelements 63 beziehungsweise des zweiten Ausfahrelements ständig derart verbunden ist, dass eine Datenkommunikation zwischen der Steuereinheit 5 und allen Motormodulen 30 möglich ist, beispielsweise um Positionsdetektordaten und/oder weitere Sensor- und/oder Systemdaten von den Motormodulen 30 zur Steuereinheit 5 zu senden und/oder um beispielweise Ansteuersignale für die Spulen der Motormodule 30 und/oder weitere Daten von der Steuereinheit 5 zu den Motormodulen 30 zu senden. Insbesondere ist also eine Datenkommunikation zwischen der Steuereinheit 5 und den Austauschmotormodulen 71 des ersten Austauschelements 73 beziehungsweise des zweiten Austauschelements 74 möglich, ohne dass entsprechende Verbindungen in Fig. 3 gezeigt sind. Die Verbindungen können kabelgebunden oder drahtlos sein. Kabelgebundene Verbindungen können dabei über den rotierbaren Körper 47 geführt sein. Ebenso kann vorgesehen sein, dass alle Motormodule 30 zu allen Zeiten mit einer Energieversorgung verbunden sind, um eine Bestromung der Antriebsspulen zu ermöglichen. Auch die Energieversorgung kann über den rotierbaren Körper 47 geführt sein.

Insbesondere kann vorgesehen sein, dass die Austauschmotormodule 71 des ersten Austauschelements 73 beziehungsweise des zweiten Austauschelements 74 ständig mit der Steuereinheit 5 zum Zwecke eines Datenaustauschs verbunden sind und ebenso ständig mit Energie versorgt werden, unabhängig von einer Position der Wechselvorrichtung 41.

Im Ausführungsbeispiel der Weiche 40 der Fig. 5 und 6 weist das lineare Transportsystem 1 ebenfalls eine Hauptebene auf, die analog zur Hauptebene der Fig. 5 definiert ist und senkrecht zu einer ersten Befestigungsplatte 81 ist, auf der das Ausfahrmotormodul 61 des zweiten Ausfahrelements 64 angeordnet ist. Die Hauptebene ist durch das Einfahrmotormodul 51 und das Einfahrschienenelement 52 aufgespannt. Insbesondere kann vorgesehen sein, dass alle unbeweglichen Motormodule 33 inklusive dem Einfahrmotormodul 51 und den Ausfahrmotormodulen 61 in der Hauptebene angeordnet sind. Eine solche Ausgestaltung ist in Fig. 1 beispielhaft gezeigt. Eine erste Ausfahrebene steht senkrecht auf der Hauptebene und ist durch das Ausfahrschienenelement 62 des ersten Ausfahrelements 63 geführt. Das Ausfahrschienenelement 62 des zweiten Ausfahrelements 64 liegt zumindest teilweise in einer zweiten Ausfahrebene, wobei die zweite Ausfahrebene parallel zu ersten Ausfahrebene ist und beabstandet zur ersten Ausfahrebene angeordnet ist. In dieser Ausführungsform sind das erste Ausfahrelement 63 und das zweite Ausfahrelement 64 in unterschiedlichen Ebenen vorgesehen. Dies ist in den Fig. 5 und 6 gezeigt. Hier ist das erste Ausfahrelement 63 oberhalb des zweiten Ausfahrelements 64 angeordnet.

Das erste Ausfahrelement 63 und das zweite Ausfahrelement 64 sind in den Ausführungsbeispielen der Weiche 40 der Fig. 3 und 4 beziehungsweise 5 und 6 jeweils identisch. Es können also Weichen 40 mit einem ersten Ausfahrelement 63 und einem zweiten Ausfahrelement 64 wie beispielsweise in Fig. 1 gezeigt bereitgestellt werden, unabhängig von einer Ausgestaltung des Antriebs 46 und des beweglichen Weichenelements 44.

Im Ausführungsbeispiel der Weiche 40 der Fig. 5 und 6 ist eine erste Befestigungsplatte 81 vorgesehen, auf der das Einfahrelement 50 und das zweite Ausfahrelement 64 angeordnet sind. Eine Ausnehmung 84 in der ersten Befestigungsplatte 81 dient einer Aufnahme der Austauschelemente 70 des rotierbaren Körpers 47. Der rotierbare Körper 47 kann beispielsweise derart unter der Ausnehmung 84 angeordnet sein, und die Ausnehmung 84 groß genug sein, dass die Austauschelemente 70 beim Rotieren des rotierbaren Körpers 47 nicht gegen die erste Befestigungsplatte 81 stoßen. Der Antrieb 46 kann auf einer Antriebsbefestigungsplatte 86 angeordnet sein. Die erste Befestigungsplatte 81 kann dabei senkrecht zur oben beschriebenen Hauptebene stehen. Eine zweite Befestigungsplatte 82 ist parallel zu ersten Befestigungsplatte 81 angeordnet. Das erste Ausfahrelement 63 ist auf der zweiten Befestigungsplatte 82 befestigt, wobei hier ein optionales Stützelement 85 vorgesehen ist, mit dem ein Abstand zwischen der zweiten Befestigungsplatte 82 und dem ersten Ausfahrelement 63 eingestellt werden kann.

In einem Ausführungsbeispiel des linearen Transportsystems 1 beziehungsweise der Weiche 40 weist die Wechselvorrichtung 41 mehr als zwei Austauschelemente 70 mit jeweils einem Austauschmotormodul 71 und jeweils einem zur Führungsschiene 2 gehörigen Austauschschienenelement 72 auf. Die Weiche 40 weist ferner eine der Anzahl der Austauschelemente 70 angepasste Anzahl an statischen Ausfahrelementen 60 mit jeweils einem Ausfahrmotormodul 61 und jeweils einem zur Führungsschiene 2 gehörigen Ausfahrschienenelement 62 auf. Dies ermöglicht, mehr als zwei Ausfahrelemente 60 mittels der Weiche 40 zu erreichen. Solche Weichen 40 werden im Folgenden beschrieben.

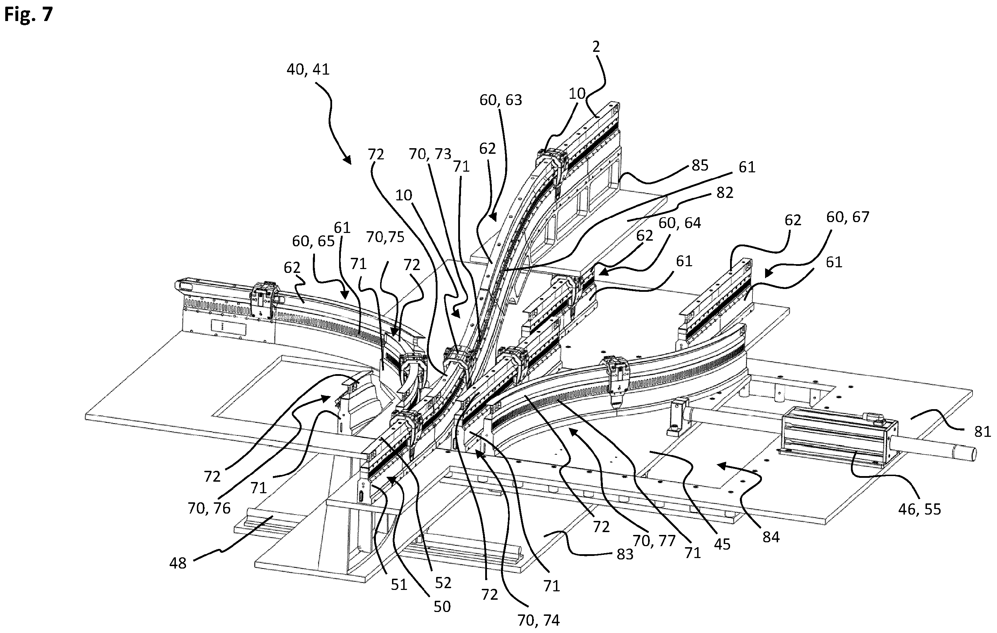

Fig. 7 zeigt eine isometrische Ansicht eines Ausführungsbeispiels einer Weiche 40, die im linearen Transportsystem 1 der Fig. 1 und 2 eingesetzt werden kann. Diese Weiche 40 entspricht der Weiche 40 der Fig. 3 und 4, sofern im Folgenden keine Unterschiede beschrieben sind.

Die Weiche 40 weist ein Einfahrelement 50 mit Einfahrmotormodul 51 und zur Führungsschiene 2 gehörendem Einfahrschienenelement 52 auf. Ferner weist die Weiche 40 beziehungsweise die Wechselvorrichtung 41 der Weiche 40 analog zu den Fig. 3 und 4 ein erstes Austauschelement 73 mit Austauschmotormodul 71 und zur Führungsschiene 2 gehörendem Austauschschienenelement 72 sowie ein zweites Austauschelement 74 mit Austauschmotormodul 71 und zur Führungsschiene 2 gehörendem Austauschschienenelement 72 auf. Ferner weist die Weiche 40 analog zu den Fig. 3 und 4 ein erstes Ausfahrelement 63 mit Ausfahrmotormodul 61 und zur Führungsschiene 2 gehörendem Ausfahrschienenelement 62 sowie ein zweites Ausfahrelement 64 mit Ausfahrmotormodul 61 und zur Führungsschiene 2 gehörendem Ausfahrschienenelement 62 auf. Darüber hinaus weist die Weiche 40 die verschiebbare Platte 45 mit Antrieb 46 und die erste Befestigungsplatte 81 sowie die zweite Befestigungsplatte 82 analog zu Fig. 3 und 4 auf. Ferner ist die Weiche 40 beziehungsweise die Wechselvorrichtung 41 der Weiche 40 in der Fig. 7 in der ersten Position dargestellt.

Die Weiche 40 der Fig. 7 weist ferner weitere Austauschelemente 70 und weitere Ausfahrelemente 60 auf. Insbesondere weist die Wechselvorrichtung 41, also die verschiebbare Platte 45, ein drittes Austauschelement 75 mit Austauschmotormodul 71 und zur Führungsschiene 2 gehörendem Austauschschienenelement 72, ein viertes Austauschelement 76 mit Austauschmotormodul 71 und zur Führungsschiene 2 gehörendem Austauschschienenelement 72 sowie ein fünftes Austauschelement 77 mit Austauschmotormodul 71 und zur Führungsschiene 2 gehörendem Austauschschienenelement 72 auf. Ferner weist die Weiche 40 ein drittes Ausfahrelement 65 mit Ausfahrmotormodul 61 und zur Führungsschiene 2 gehörendem Ausfahrschienenelement 62, ein viertes Ausfahrelement 66 mit Ausfahrmotormodul 61 und zur Führungsschiene 2 gehörendem Ausfahrschienenelement 62 sowie ein fünftes Ausfahrelement 67 mit Ausfahrmotormodul 61 und zur Führungsschiene 2 gehörendem Ausfahrschienenelement 62 auf. Das vierte Ausfahrelement 66 ist in der Darstellung teilweise von der ersten Befestigungsplatte 81 und der verschiebbaren Platte 45 verdeckt. Analog zu der Beschreibung der Verbindung des Einfahrelementes 50 mit dem ersten Ausfahrelement 63 beziehungsweise dem zweiten Ausfahrelement 64 entsprechend der Beschreibung zu den Fig. 3 und 4 kann das Einfahrelement 50 über das dritte Austauschelement 75 mit dem dritten Ausfahrelement 65 verbunden werden. Das Einfahrelement 50 kann über das vierte Austauschelement 76 mit dem vierten Ausfahrelement 66 verbunden werden. Das Einfahrelement 50 kann über das fünfte Austauschelement 77 mit dem fünften Ausfahrelement 67 verbunden werden. Alle diese Verbindungen können durch eine translatorische Bewegung der verschiebbaren Platte 45, gegebenenfalls angetrieben durch den Antrieb 46, hergestellt werden.

Das dritte Ausfahrelement 65 und das fünfte Ausfahrelement 67 sind ebenfalls auf der ersten Befestigungsplatte 81 angeordnet. Insbesondere bilden die Ausfahrschienenelemente 62 des zweiten Ausfahrelements 64, des dritten Ausfahrelements 65 und des fünften Ausfahrelements 67 eine Ebene, die parallel zur ersten Befestigungsplatte 81 und senkrecht zur Hauptebene sein kann. Ist diese Ebene durch das Einfahrschienenelement 52 geführt, entspricht diese Ebene der weiter oben bereits beschriebenen Einfahrebene. Das erste Austauschelement 73 ist wieder aus einer Ebene der ersten Befestigungsplatte 81 heraus gebogen, um das an der zweiten Befestigungsplatte 82 angeordnete erste Ausfahrelement 63 erreichen zu können.

In Fig. 7 ist ferner eine optionale dritte Befestigungsplatte 83 gezeigt, die parallel zur ersten Befestigungsplatte 81 und zur zweiten Befestigungsplatte 82 ist. Die dritte Befestigungsplatte 83 und die zweite Befestigungsplatte 82 sind dabei auf verschiedenen Seiten der ersten Befestigungsplatte 81 angeordnet. Das vierte Ausfahrelement 66 kann an der dritten Befestigungsplatte 83 befestigt sein. Ferner kann an der dritten Befestigungsplatte 83 eine Schiene 48 angeordnet sein, wobei die Schiene 48 einer Führung einer Bewegung der Wechselvorrichtung 41 beziehungsweise der verschiebbaren Platte 45 dienen kann. Eine solche Schiene 48 kann auch für die Weiche 40 der Fig. 3 und 4 vorgesehen sein.

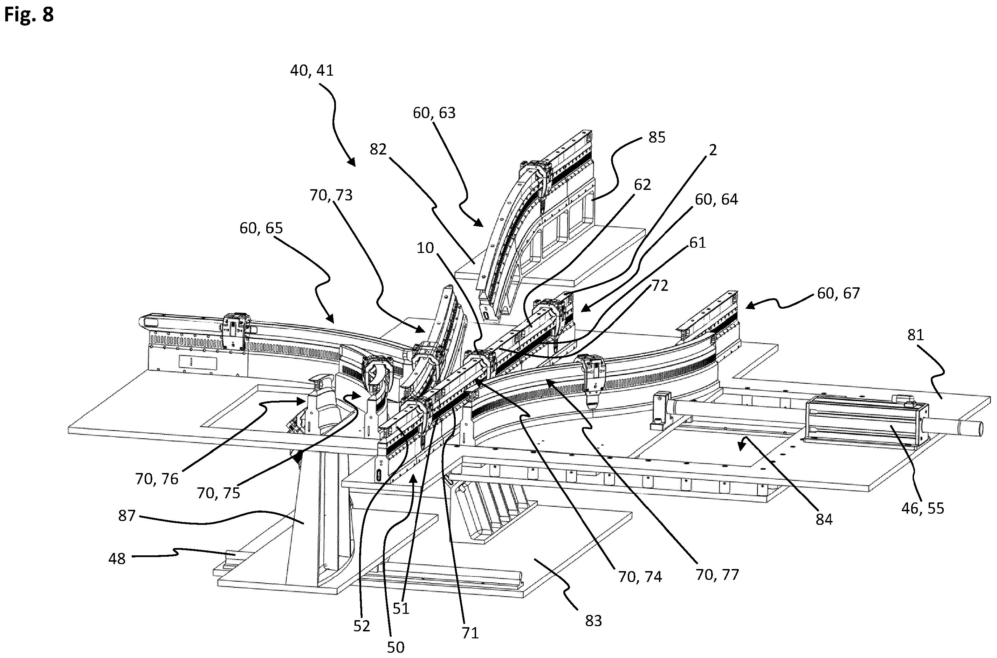

Fig. 8 zeigt die Weiche 40 der Fig. 7 in der zweiten Position der Weiche 40 beziehungsweise der Wechselvorrichtung 41 der Weiche 40, so dass nun das Einfahrelement 50 über das zweite Austauschelement 74 mit dem zweiten Ausfahrelement 64 verbunden ist. Das zweite Austauschelement 74 ist wieder linear, um das zweite Ausfahrelement 64 erreichen zu können. Somit entspricht der Aufbau der Fig. 8 im Wesentlichen dem Aufbau entsprechend der Fig. 4. Die in dem Zusammenhang gemachten Erläuterungen gelten hier in analoger Weise.

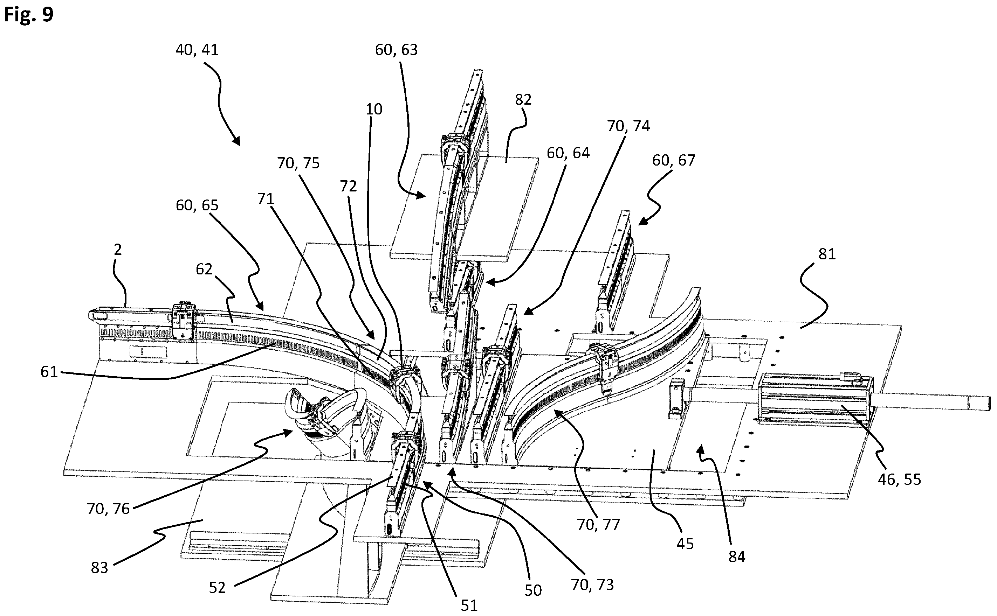

Fig. 9 zeigt die Weiche 40 der Fig. 7 und 8 in einer dritten Position der Weiche 40 beziehungsweise der Wechselvorrichtung 41 der Weiche 40. Das Einfahrelement 50 ist nun über das dritte Austauschelement 75 mit dem dritten Ausfahrelement 65 verbunden. Das dritte Austauschelement 75 ist dabei ebenfalls gebogen. Im Gegensatz zum ersten Austauschelement 73, welches vollständig in der Hauptebene angeordnet ist, verlässt das dritte Austauschelement 75 die Hauptebene. Zusammen mit dem dritten Ausfahrelement 65 bildet das dritte Austauschelement 75 eine 90-Grad-Kurve in einer Ebene parallel zur ersten Befestigungsplatte 81.

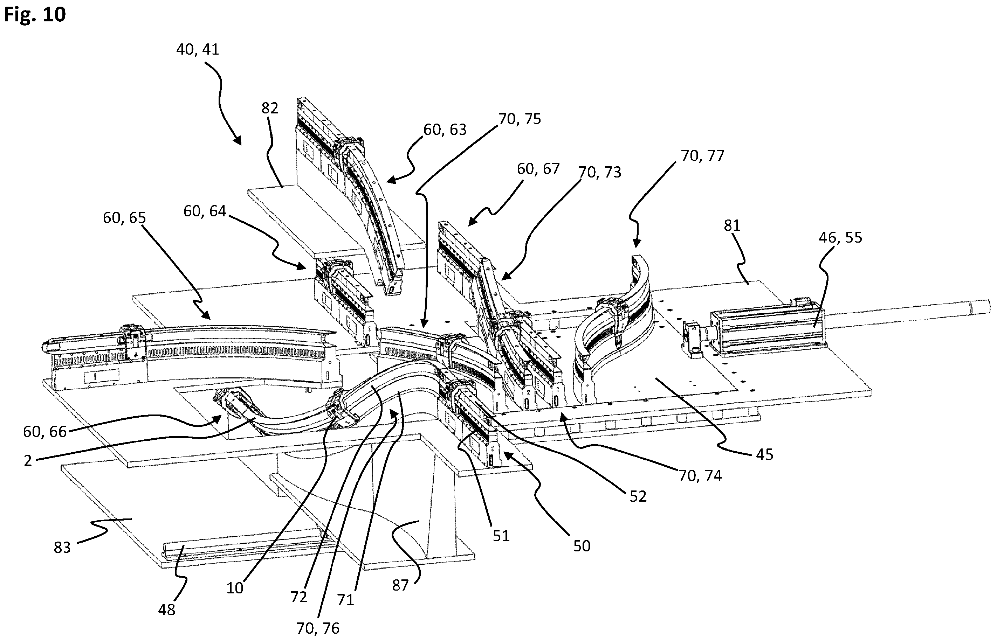

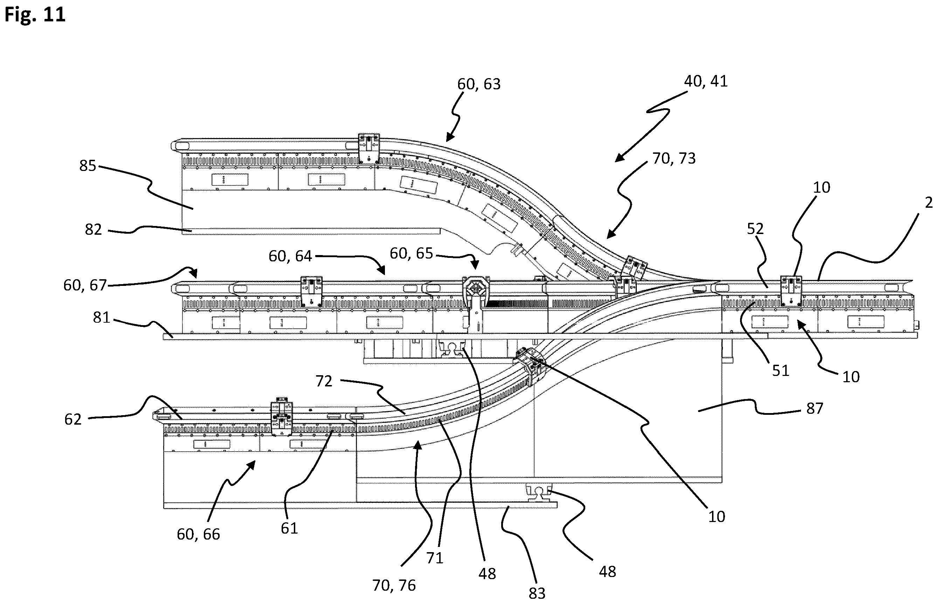

Fig. 10 und 11 zeigen die Weiche 40 der Fig. 7 bis 9 in einer vierten Position der Weiche 40 beziehungsweise der Wechselvorrichtung 41 der Weiche 40. Das Einfahrelement 50 ist nun über das vierte Austauschelement 76 mit dem vierten Ausfahrelement 66 verbunden. Das vierte Austauschelement 76 ist dabei ebenfalls gebogen. Das vierte Austauschelement 76 ist dabei insbesondere derart gebogen, dass das vierte Ausfahrelement 66, welches außerhalb sowohl der Haupterstreckungsebene als auch unterhalb der Einfahrebene angeordnet ist, über das vierte Austauschelement 76 mit dem Einfahrelement 50 verbunden ist. Ferner ist das vierte Ausfahrelement 66 in sich um 45 Grad verdreht, so dass eine Ebene durch das Ausfahrmotorelement 61 des vierten Ausfahrelements 66 und das Ausfahrschienenelement 62 des vierten Ausfahrelements 66 sowohl in einem 45 Grad Winkel zur Hauptebene als auch in einem 45 Grad Winkel zur Einfahrebene steht.

Ferner ist in Fig. 11 zu sehen, dass die verschiebbare Platte 45 in zwei Ebenen angeordnet ist, zwischen denen eine Versatzstruktur 87 angeordnet ist. Die Versatzstruktur 87 ist insbesondere dann vorteilhaft, wenn eines der Austauschelemente 70, hier das vierte Austauschelement 76 in eine Ebene unterhalb der ersten Befestigungsplatte 81 führen soll. Außerdem ist in Fig 11 neben der bereits im Zusammenhang mit Fig. 7 beschriebenen Führungsschiene auf der dritten Befestigungsplatte 83 eine Führungsschiene 48 unterhalb der ersten Befestigungsplatte 81 dargestellt. Es können also zwei oder auch mehr als zwei Führungsschienen 48 der Führung der Bewegung der Wechselvorrichtung 41 beziehungsweise der verschiebbaren Platte 45 dienen.

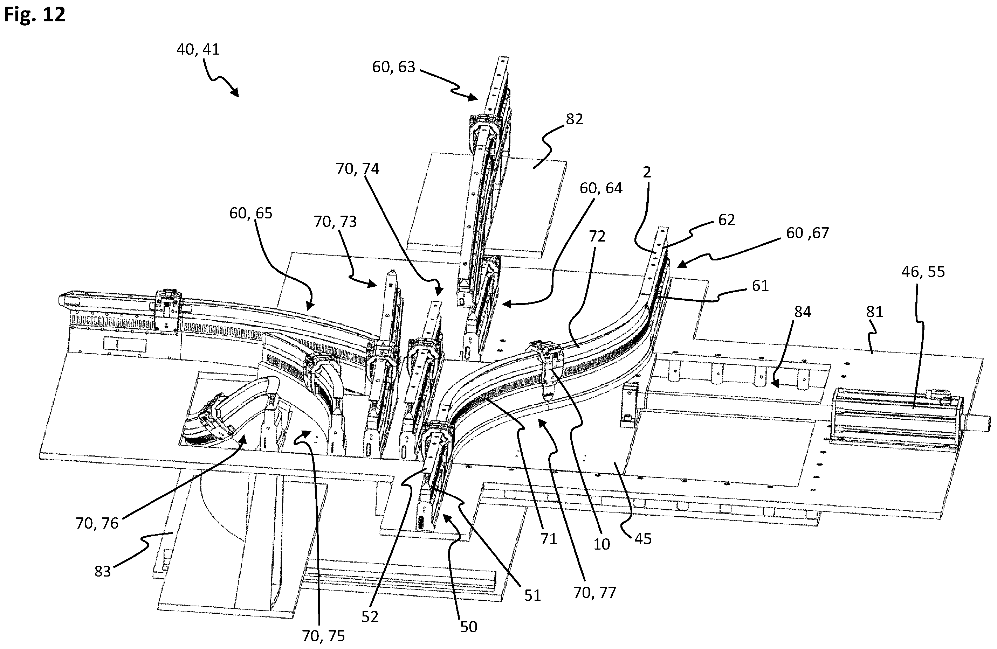

Fig. 12 zeigt die Weiche 40 der Fig. 7 bis 11 in einer fünften Position der Weiche 40 beziehungsweise der Wechselvorrichtung 41 der Weiche 40. Das Einfahrelement 50 ist nun über das fünfte Austauschelement 77 mit dem fünften Ausfahrelement 67 verbunden. Das fünfte Austauschelement 77 ist dabei ebenfalls gebogen. Das fünfte Ausfahrelement 67 ist dabei parallel zum zweiten Ausfahrelement 64 angeordnet. Das fünfte Austauschelement 77 ist derart gebogen, dass es aus der Hauptebene geführt und anschließend in eine Ebene parallel zur Hauptebene geführt ist.

In der Weiche 40 der Fig. 7 bis 12 sind die Austauschelemente 70 derart auf der verschiebbaren Platte 45 angeordnet, dass am weitesten vom Antrieb 46 entfernt das vierte Austauschelement 76 angeordnet ist und dann, immer näher an den Antrieb 46 heranrückend, das dritte Austauschelement 75, das erste Austauschelement 73, das zweite Austauschelement 74 und das fünfte Austauschelement 77. Selbstverständlich können die Austauschelemente 70 auch in einer anderen Reihenfolge auf der verschiebbaren Platte 45 angeordnet sein. Ferner kann eine beliebige Kombination von zwei, drei oder vier der in den Fig. 7 bis 12 exemplarisch gezeigten Austauschelementen 70 auf der verschiebbaren Platte 45 und die zugehörigen Ausfahrelemente 60 angeordnet sein. Ferner können weitere, nicht gezeigte und anders geformte Austauschelemente 70 mit passend ausgestalteten Ausfahrelementen 60 ebenfalls vorgesehen sein.

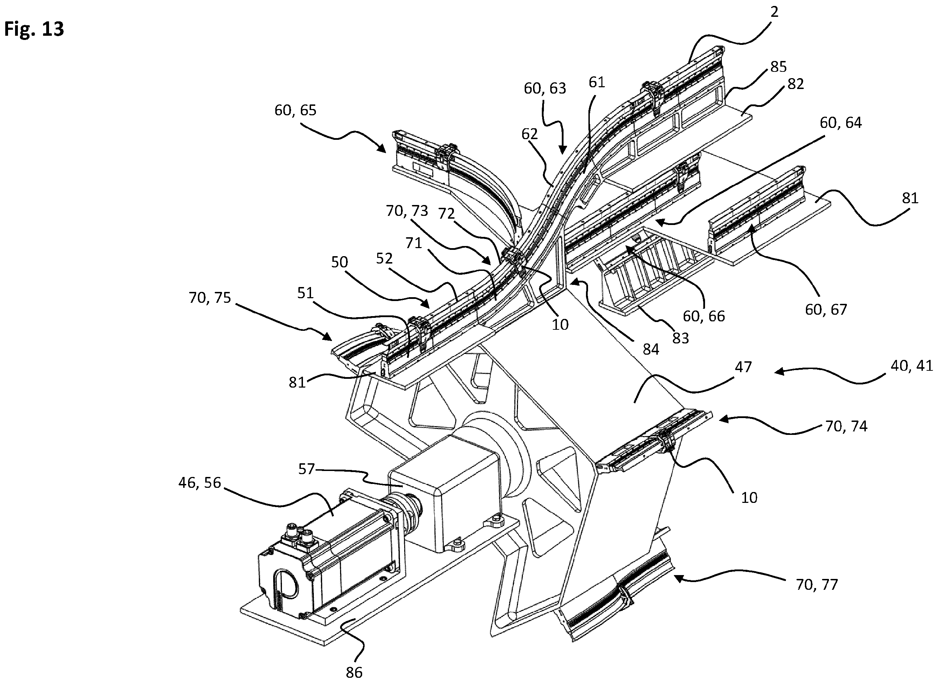

Fig. 13 zeigt eine isometrische Ansicht eines Ausführungsbeispiels einer Weiche 40, die im linearen Transportsystem 1 der Fig. 1 und 2 eingesetzt werden kann. Diese Weiche 40 entspricht der Weiche der Fig. 5 und 6, sofern im Folgenden keine Unterschiede beschrieben sind.

Die Weiche 40 weist ein Einfahrelement 50 mit Einfahrmotormodul 51 und zur Führungsschiene 2 gehörendem Einfahrschienenelement 52 auf. Ferner weist die Weiche 40 beziehungsweise die Wechselvorrichtung 41 der Weiche 40 analog zu den Fig. 5 und 6 ein erstes Austauschelement 73 mit Austauschmotormodul 71 und zur Führungsschiene 2 gehörendem Austauschschienenelement 72 sowie ein zweites Austauschelement 74 mit Austauschmotormodul 71 und zur Führungsschiene 2 gehörendem Austauschschienenelement 72 auf. Ferner weist die Weiche 40 analog zu den Fig. 5 und 6 ein erstes Ausfahrelement 63 mit Ausfahrmotormodul 61 und zur Führungsschiene 2 gehörendem Ausfahrschienenelement 62 sowie ein zweites Ausfahrelement 64 mit Ausfahrmotormodul 61 und zur Führungsschiene 2 gehörendem Ausfahrschienenelement 62 auf. Darüber hinaus weist die Weiche 40 den rotierbaren Körper 47 mit Antrieb 46 und die erste Befestigungsplatte 81 sowie die zweite Befestigungsplatte 82 sowie die Antriebsbefestigungsplatte 86 analog zu Fig. 5 und 6 auf. Ferner ist die Weiche 40 beziehungsweise die Wechselvorrichtung 41 der Weiche 40 in der Fig. 13 in der ersten Position dargestellt.

Die Weiche 40 der Fig. 13 weist ferner weitere Austauschelemente 70 und weitere Ausfahrelemente 60 auf. Insbesondere weist die Wechselvorrichtung 41, also der rotierbare Körper 47, ein drittes Austauschelement 75 mit Austauschmotormodul 71 und zur Führungsschiene 2 gehörendem Austauschschienenelement 72, ein viertes Austauschelement 76 mit Austauschmotormodul 71 und zur Führungsschiene 2 gehörendem Austauschschienenelement 72 sowie ein fünftes Austauschelement 77 mit Austauschmotormodul 71 und zur Führungsschiene 2 gehörendem Austauschschienenelement 72 auf. Aufgrund der Ansicht der Fig. 13 sind jedoch nur das erste Austauschelement 73, das zweite Austauschelement 74 und das fünfte Austauschelement 77 sichtbar. Das dritte Austauschelement 75 und das vierte Austauschelement 76 sind durch den rotierbaren Körper 47 verdeckt. Das erste Austauschelement 73 entspricht von der Form her dem ersten Austauschelement 73 der Weiche 40 der Fig. 7 bis 12. Das zweite Austauschelement 74 entspricht von der Form her dem zweiten Austauschelement 74 der Weiche 40 der Fig. 7 bis 12. Das dritte Austauschelement 75 entspricht von der Form her dem dritten Austauschelement 75 der Weiche 40 der Fig. 7 bis 12. Das vierte Austauschelement 76 entspricht von der Form her dem vierten Austauschelement 76 der Weiche 40 der Fig. 7 bis 12. Das fünfte Austauschelement 77 entspricht von der Form her dem fünften Austauschelement 77 der Weiche 40 der Fig. 7 bis 12. Ferner weist die Weiche 40 ein drittes Ausfahrelement 65 mit Ausfahrmotormodul 61 und zur Führungsschiene 2 gehörendem Ausfahrschienenelement 62, ein viertes Ausfahrelement 66 mit Ausfahrmotormodul 61 und zur Führungsschiene 2 gehörendem Ausfahrschienenelement 62 sowie ein fünftes Ausfahrelement 67 mit Ausfahrmotormodul 61 und zur Führungsschiene 2 gehörendem Ausfahrschienenelement 62 auf. Das vierte Ausfahrelement 66 ist dabei teilweise von der ersten Befestigungsplatte 81 verdeckt. Analog zu der Beschreibung der Verbindung des Einfahrelementes 50 mit dem ersten Ausfahrelement 63 beziehungsweise dem zweiten Ausfahrelement 64 entsprechend der Beschreibung zu den Fig. 5 und 6 kann das Einfahrelement 50 über das dritte Austauschelement 75 mit dem dritten Ausfahrelement 65 verbunden werden. Das Einfahrelement 50 kann über das vierte Austauschelement 76 mit dem vierten Ausfahrelement 66 verbunden werden. Das Einfahrelement 50 kann über das fünfte Austauschelement 77 mit dem fünften Ausfahrelement 67 verbunden werden. Alle diese Verbindungen können durch eine rotierende Bewegung des rotierbaren Körpers 47, gegebenenfalls angetrieben durch den Antrieb 46, hergestellt werden.

Das dritte Ausfahrelement 65 und das fünfte Ausfahrelement 67 sind ebenfalls auf der ersten Befestigungsplatte 81 angeordnet. Insbesondere bilden die Ausfahrschienenelemente 62 des zweiten Ausfahrelements 64, des dritten Ausfahrelements 65 und des fünften Ausfahrelements 67 eine Ebene, die parallel zur ersten Befestigungsplatte 81 und senkrecht zur Hauptebene sein kann. Ist diese Ebene durch das Einfahrschienenelement 52 geführt, entspricht diese Ebene der weiter oben bereits beschriebenen Einfahrebene. Das erste Austauschelement 73 ist wieder aus einer Ebene der ersten Befestigungsplatte 81 heraus gebogen, um das an der zweiten Befestigungsplatte 82 angeordnete erste Ausfahrelement 63 erreichen zu können.

In Fig. 13 ist ferner eine optionale dritte Befestigungsplatte 83 gezeigt, die parallel zur ersten Befestigungsplatte 81 und zur zweiten Befestigungsplatte 82 ist. Die dritte Befestigungsplatte 83 und die zweite Befestigungsplatte 82 sind dabei auf verschiedenen Seiten der ersten Befestigungsplatte 81 angeordnet. Das vierte Ausfahrelement 66 kann an der dritten Befestigungsplatte 83 befestigt sein.

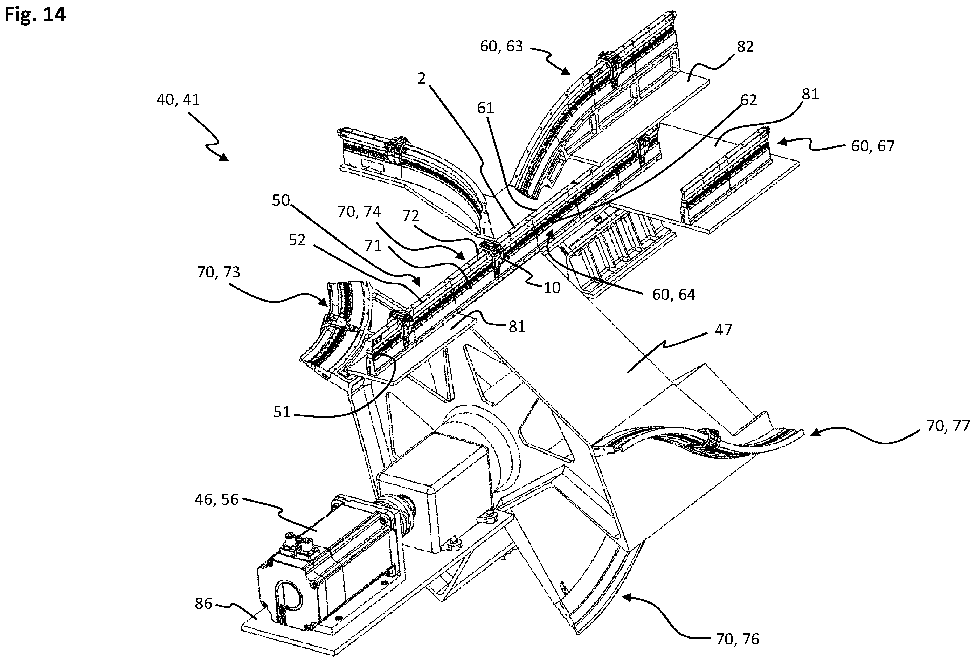

Fig. 14 zeigt die Weiche 40 der Fig. 13 in der zweiten Position der Weiche 40 beziehungsweise der Wechselvorrichtung 41 der Weiche 40, so dass nun das Einfahrelement 50 über das zweite Austauschelement 74 mit dem zweiten Ausfahrelement 64 verbunden ist. Das zweite Austauschelement 74 ist wieder linear, um das zweite Ausfahrelement 64 erreichen zu können. Im Ausführungsbeispiel der Fig. 13 und 14 sind das erste Austauschelement 73 und das zweite Austauschelement 74 nicht gegenüberliegend am rotierbaren Körper 47 angeordnet.

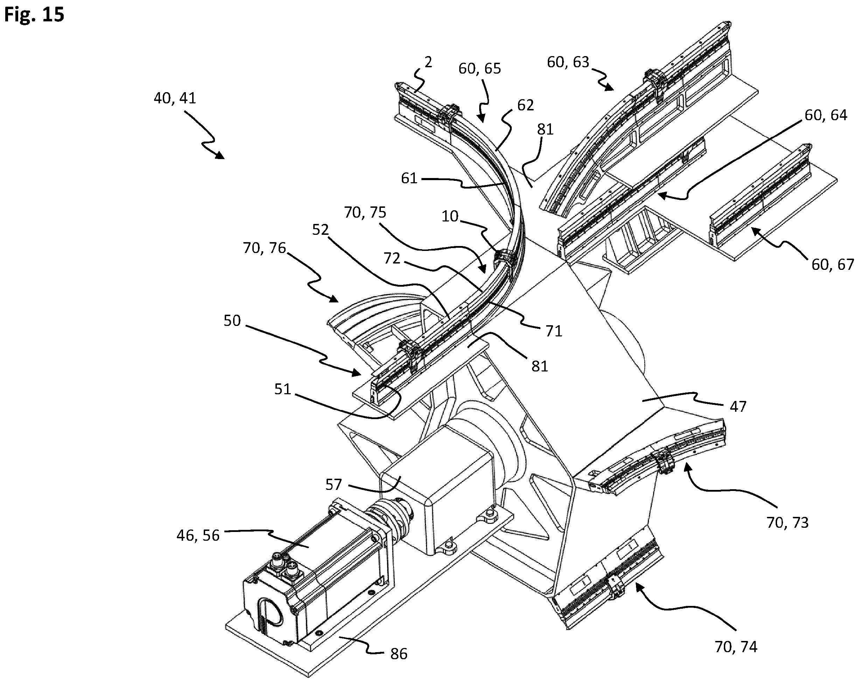

Fig. 15 zeigt die Weiche 40 der Fig. 13 und 14 in einer dritten Position der Weiche 40 beziehungsweise der Wechselvorrichtung 41 der Weiche 40. Das Einfahrelement 50 ist nun über das dritte Austauschelement 75 mit dem dritten Ausfahrelement 65 verbunden. Das dritte Austauschelement 75 ist dabei ebenfalls gebogen. Im Gegensatz zum ersten Austauschelement 73, welches vollständig in der Hauptebene angeordnet ist, verlässt das dritte Austauschelement 75 die Hauptebene. Zusammen mit dem dritten Ausfahrelement 65 bildet das dritte Austauschelement 75 eine 90-Grad-Kurve in einer Ebene parallel zur ersten Befestigungsplatte 81.

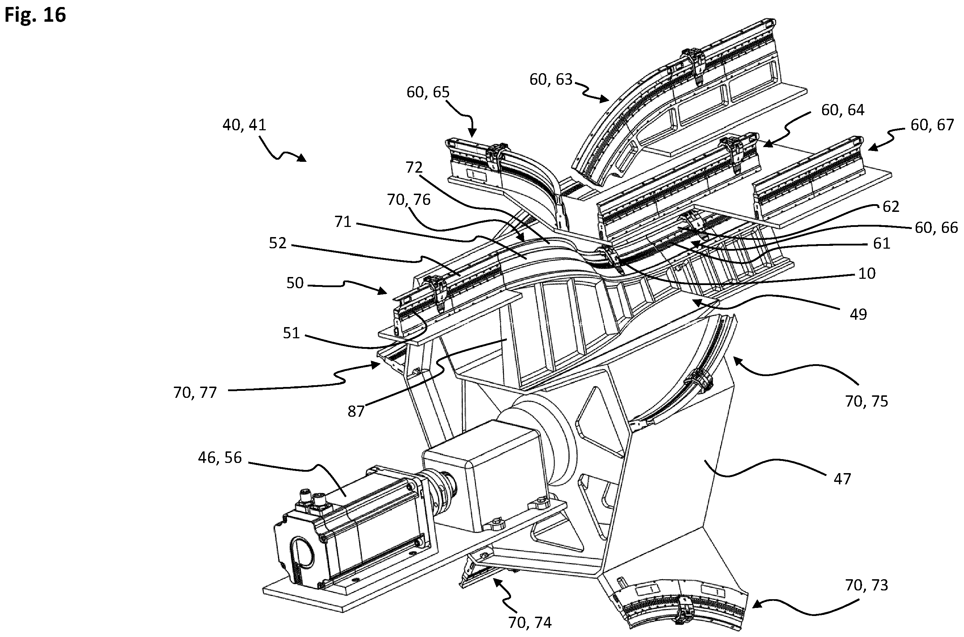

Fig. 16 zeigt die Weiche 40 der Fig. 13 bis 15 in einer vierten Position der Weiche 40 beziehungsweise der Wechselvorrichtung 41 der Weiche 40. Das Einfahrelement 50 ist nun über das vierte Austauschelement 76 mit dem vierten Ausfahrelement 66 verbunden. Das vierte Austauschelement 76 ist dabei ebenfalls gebogen. Das vierte Austauschelement 76 ist dabei derart gebogen, dass das vierte Ausfahrelement 66, welches außerhalb sowohl der Haupterstreckungsebene als auch unterhalb der Einfahrebene angeordnet ist, über das vierte Austauschelement 76 mit dem Einfahrelement 50 verbunden ist. Ferner ist das vierte Ausfahrelement 66 in sich um 45 Grad verdreht, so dass eine Ebene durch das Ausfahrmotorelement 61 des vierten Ausfahrelements 66 und das Ausfahrschienenelement 62 des vierten Ausfahrelements 66 sowohl in einem 45 Grad Winkel zur Hauptebene als auch in einem 45 Grad Winkel zur Einfahrebene steht. Der rotierbare Körper 47 weist eine Vertiefung 49 auf, in der das vierte Austauschelement 76 zumindest teilweise angeordnet ist.

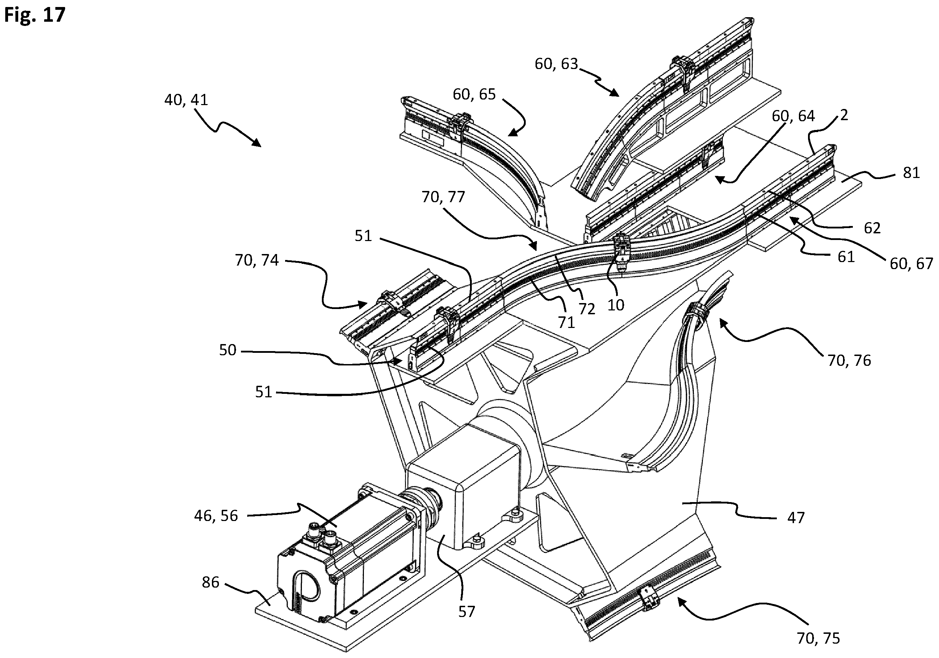

Fig. 17 zeigt die Weiche 40 der Fig. 13 bis 16 in einer fünften Position der Weiche 40 beziehungsweise der Wechselvorrichtung 41 der Weiche 40. Das Einfahrelement 50 ist nun über das fünfte Austauschelement 77 mit dem fünften Ausfahrelement 67 verbunden. Das fünfte Austauschelement 77 ist dabei ebenfalls gebogen. Das fünfte Ausfahrelement 67 ist dabei parallel zum zweiten Ausfahrelement 64 angeordnet. Das fünfte Austauschelement 77 ist derart gebogen, dass es aus der Hauptebene geführt und anschließend in eine Ebene parallel zur Hauptebene geführt ist.

In der Weiche 40 der Fig. 13 bis 17 sind die Austauschelemente 70 derart auf dem rotierbaren Körper 47 angeordnet, dass bei einer Rotation des rotierbaren Körpers 47 im Uhrzeigersinn auf das erste Austauschelement 73 das zweite Austauschelement 74, darauf das fünfte Austauschelement 77, darauf das vierte Austauschelement 76 und darauf das dritte Austauschelement 75 folgt. Selbstverständlich können die Austauschelemente 70 auch in einer anderen Reihenfolge am rotierbaren Körper 47 angeordnet sein. Ferner kann eine beliebige Kombination von zwei, drei oder vier der in den Fig. 13 bis 17 exemplarisch gezeigten Austauschelemente 70 auf dem rotierbaren Körper 47 und die zugehörigen Ausfahrelemente 60 angeordnet sein. Ferner können weitere, nicht gezeigte und anders geformte Austauschelemente 70 mit passend ausgestalteten Ausfahrelementen 60 ebenfalls vorgesehen sein.

In einem Ausführungsbeispiel des linearen Transportsystems 1 beziehungsweise der Weiche 40 ist zumindest ein Austauschelement 70 gebogen. Insbesondere können auch beide Austauschelemente 70 oder mehr als ein Austauschelement 70 gebogen sein. Dadurch kann die Weiche 40 beziehungsweise das lineare Transportsystem 1 noch flexibler gestaltet werden. In den Ausführungsbeispielen der Fig. 3 bis 17 ist das erste Austauschelement 73 und in den Ausführungsbeispielen der Fig. 7 bis 17 sind jeweils die dritten Austauschelement 75, die vierten Austauschelement 76 und die fünften Austauschelemente 77 gebogen.

Es kann vorgesehen sein, dass das Einfahrelement 50, die Austauschelemente 70 und die Ausfahrelemente 60 derart angeordnet sind, dass eine Bewegung der Wechselvorrichtung 41 nicht mechanisch gehindert ist. Insbesondere kann vorgesehen sein, dass die Führungsschienen 2 von Einfahrelement 50, Austauschelementen 70 und Ausfahrelementen 60 ineinander greifen. Ferner kann an den Führungsschienen 2 am Übergang zwischen dem Einfahrelement 50 und den Austauschelementen 70 sowie zwischen den Austauschelementen 70 und den Ausfahrelementen 60 ein Führungsschienenspalt vorgesehen sein, der maximal zwanzig Prozent, bevorzugt maximal zehn Prozent, eines Durchmessers der Rollen 11 der beweglichen Einheit 10 ist.

In einem Ausführungsbeispiel des linearen Transportsystems 1 beziehungsweise der Weiche 40 weist das lineare Transportsystem 1 beziehungsweise die Weiche 40 eine Hauptebene auf. Die Hauptebene ist durch das Einfahrmotormodul 51 und das Einfahrschienenelement 52 aufgespannt. Eine erste Ausfahrebene steht senkrecht auf der Hauptebene und ist durch das Ausfahrschienenelement 62 des ersten Ausfahrelements 63 geführt. Das Ausfahrschienenelement 62 des zweiten Ausfahrelements 64 liegt ebenfalls in der ersten Ausfahrebene.

In einem Ausführungsbeispiel des linearen Transportsystems 1 beziehungsweise der Weiche 40 weist das lineare Transportsystem eine Hauptebene auf. Die Hauptebene ist durch das Einfahrmotormodul 51 und das Einfahrschienenelement 52 aufgespannt. Eine erste Ausfahrebene steht senkrecht auf der Hauptebene und ist durch das Ausfahrschienenelement 62 des ersten Ausfahrelements 63 geführt. Das Ausfahrschienenelement 62 des zweiten Ausfahrelements 64 liegt zumindest teilweise in einer zweiten Ausfahrebene, wobei die zweite Ausfahrebene parallel zu ersten Ausfahrebene ist und beabstandet zur ersten Ausfahrebene angeordnet ist. In dieser Ausführungsform sind also Ausfahrelemente 60 in unterschiedlichen Ebenen vorgesehen. Dies ist in den Ausgestaltungen der Fig. 3 bis 6 beispielsweise für das erste Ausfahrelement 63 und das zweite Ausfahrelement 64 der Fall. In den Ausführungsbeispielen der Fig. 7 bis 17 liegen das das erste Ausfahrelement 63 und das zweite Ausfahrelement 64 ebenfalls in unterschiedlichen Ausfahrebenen. In der zweiten Ausfahrebene sind ferner die Ausfahrschienenelemente 62 des dritten Ausfahrelements 65 und des fünften Ausfahrelements 67 angeordnet, während das Ausfahrschienenelement 62 des vierten Ausfahrelements 66 in einer dritten Ausfahrebene liegt, wobei die dritte Ausfahrebene beabstandet zur ersten Ausfahrebene und zur zweiten Ausfahrebene angeordnet ist und die dritte Ausfahrebene ferner parallel zur ersten Ausfahrebene beziehungsweise zur zweiten Ausfahrebene ist.

In einem Ausführungsbeispiel des linearen Transportsystems 1 beziehungsweise der Weiche 40 schließt in der ersten Position das Einfahrmotormodul 51 bündig an das Austauschmotormodul 71 des ersten Austauschelements 73 und das Austauschmotormodul 71 des ersten Austauschelements 73 bündig an das Ausfahrmotormodul 61 des ersten Ausfahrelements 63 an. In der zweiten Position schließt das Einfahrmotormodul 51 bündig an das Austauschmotormodul 71 des zweiten Austauschelements 74 und das Austauschmotormodul 71 des zweiten Austauschelements 74 bündig an das Ausfahrmotormodul 61 des zweiten Ausfahrelements 64 an. So kann ein einfacher Übergang der beweglichen Einheit 10 erreicht werden.

In einem Ausführungsbeispiel des linearen Transportsystems 1 beziehungsweise der Weiche 40 ist in der ersten Position zwischen dem Einfahrmotormodul 51 und dem Austauschmotormodul 71 des ersten Austauschelements 73 ein Einfahrspalt mit einer vorgegebenen Einfahrspaltbreite angeordnet. Die Einfahrspaltbreite kann dabei insbesondere kleiner sein als ein Spulenabstand zwischen zwei Antriebsspulen 34 der Motormodule 33.

In einem Ausführungsbeispiel des linearen Transportsystems 1 beziehungsweise der Weiche 40 ist in der ersten Position zwischen dem Austauschmotormodul 71 des ersten Austauschelements 73 und dem Ausfahrmotormodul 61 des ersten Ausfahrelements 63 ein Ausfahrspalt mit einer vorgegebenen Ausfahrspaltbreite angeordnet. Die Ausfahrspaltbreite kann dabei insbesondere kleiner sein als ein Spulenabstand zwischen zwei Antriebsspulen 34 der Motormodule 33.

In einem Ausführungsbeispiel des linearen Transportsystems 1 beziehungsweise der Weiche 40 sind die Antriebsspulen 34 innerhalb der Motormodule 33 derart angeordnet, dass jeweils zwei Antriebsspulen 34 einen vorgegebenen Abstand aufweisen. Eine in Fahrtrichtung hinten angeordnete Antriebsspule 34 im Einfahrmotormodul 50 und eine in Fahrtrichtung vorne angeordnete Antriebsspule 34 im Austauschmotormodul 71 des ersten Austauschelements 73 weisen ebenfalls den vorgegebenen Abstand auf, wenn die Wechselvorrichtung 41 in der ersten Position angeordnet ist. Die in Fahrtrichtung hinten angeordnete Antriebsspule 34 im Einfahrmotormodul 51 und eine in Fahrtrichtung vorne angeordnete Antriebsspule 34 im Austauschmotormodul 71 des zweiten Austauschelements 74 weisen ebenfalls den vorgegebenen Abstand auf, wenn die Wechselvorrichtung 41 in der zweiten Position angeordnet ist. Mit dieser Ausgestaltung kann insbesondere ein identischer Antriebsspulenabstand zwischen dem Einfahrmotormodul 51 und den Austauschmotormodulen 71 erreicht werden. Dieser Antriebsspulenabstand kann dem in den Motormodulen 33 generell vorhandenen Antriebsspulenabstand entsprechen. Dieser Abstand kann auch jeweils für eine in Fahrtrichtung vorne angeordnete Antriebsspule 34 des Austauschmotormoduls 71 des dritten Austauschelements 75, des vierten Austauschelements 76 und des fünften Austauschelements 77 vorgesehen sein.

In einem Ausführungsbeispiel des linearen Transportsystems 1 beziehungsweise der Weiche 40 weisen eine in Fahrtrichtung hinten angeordnete Antriebsspule 34 im Austauschmotormodul 71 des ersten Austauschelements 73 und eine in Fahrtrichtung vorne angeordnete Antriebsspule 34 im Ausfahrmotormodul 61 des ersten Ausfahrelements 63 ebenfalls den vorgegebenen Abstand auf, wenn die Wechselvorrichtung 41 in der ersten Position angeordnet ist. Eine in Fahrtrichtung hinten angeordnete Antriebsspule 34 im Austauschmotormodul 71 des zweiten Austauschelements 74 und eine in Fahrtrichtung vorne angeordnete Antriebsspule 34 im Ausfahrmotormodul 61 des zweiten Ausfahrelements 64 ebenfalls den vorgegebenen Abstand auf, wenn die Wechselvorrichtung 41 in der zweiten Position angeordnet ist. Mit dieser Ausgestaltung kann insbesondere ein identischer Antriebsspulenabstand zwischen den Austauschmotormodulen 71 und den Ausfahrmotormodulen 61 erreicht werden. Dieser Antriebsspulenabstand kann dem in den Motormodulen 33 generell vorhandenen Antriebsspulenabstand entsprechen. Dieser Abstand kann auch jeweils für eine in Fahrtrichtung hinten angeordnete Antriebsspule 34 des Austauschmotormoduls 71 des dritten Austauschelements 75 und eine in Fahrtrichtung vorne angeordnete Antriebsspule 34 des Ausfahrmotormoduls 61 des dritten Ausfahrelements 65, eine in Fahrtrichtung hinten angeordnete Antriebsspule 34 des vierten Austauschelements 76 und eine in Fahrtrichtung vorne angeordnete Antriebsspule 34 des Ausfahrmotormoduls 61 des vierten Ausfahrelements 66 und des eine in Fahrtrichtung hinten angeordnete Antriebsspule 34 fünften Austauschelements 77 und eine in Fahrtrichtung vorne angeordnete Antriebsspule 34 des Ausfahrmotormoduls 61 des fünften Ausfahrelements 67 vorgesehen sein.

In allen Ausführungsbeispielen der Weiche 40 der Fig. 1 bis 17 kann vorgesehen sein, dass eine bewegliche Einheit 10 auf eines der Austauschelemente 70 bewegt wird und dort angehalten. Wird nun die Wechselvorrichtung 41 bewegt, kann die bewegliche Einheit 10 durch das Austauschmotormodul 71 des entsprechenden Austauschelements 70 an Ort und Stelle gehalten werden und eine andere bewegliche Einheit 10 über die Weiche bewegt werden. Die gerade nicht genutzten Austauschelemente 70 können also gegebenenfalls zusätzlich zur Pufferung der beweglichen Einheiten 10 verwendet werden. Alternativ oder zusätzlich kann vorgesehen sein, dass eine bewegliche Einheit 10 auf eines der Austauschelemente 70 bewegt wird und dort angehalten wird. Wird nun die Wechselvorrichtung 41 bewegt, kann gegebenenfalls ein weiteres Ausfahrelement 60 an das betreffende Austauschelement 70 angrenzen, so dass die bewegliche Einheit 10 nun zu diesem weiteren Ausfahrelement 60 bewegt werden kann.

Fig. 18 zeigt ein Ablaufdiagramm 100 eines Verfahrens zum Betreiben eines linearen Transportsystems 1 mit einer Weiche 40. Dieses lineare Transportsystem 1 kann ausgebildet sein wie eines der linearen Transportsysteme 1 entsprechend der zuvor beschriebenen Fig. 1 bis 17. In diesem Verfahren wird in einem ersten Verfahrensschritt 101 eine Stellung einer Wechselvorrichtung 41 des linearen Transportsystems 1, also insbesondere einer Weiche 40 des linearen Transportsystems 1, festgestellt. In einem danach ausgeführten zweiten Verfahrensschritt 102 wird ein Steuerprogramm anhand der Stellung ausgewählt. Ferner erfolgt in einem danach ausgeführten dritten Verfahrensschritt 103 ein logisches Weiterschalten von Antriebsspulen 34 des linearen Transportsystems 1 anhand der Stellung. Dieses Verfahren kann insbesondere durch eine Steuereinheit 5 des linearen Transportsystems 1 durchgeführt werden.

In einem Ausführungsbeispiel des Verfahrens zum Betreiben des linearen Transportsystems 1 wird in einem optionalen vierten Verfahrensschritt, der zwischen dem zweiten Verfahrensschritt 102 und dem dritten Verfahrensschritt 103 ausgeführt wird, eine Position der beweglichen Einheit 10 mittels innerhalb der Motormodule 33 angeordneten Positionsdetektoren 36 bestimmt. Ferner werden anzusteuernde Antriebsspulen 34 in einem fünften Verfahrensschritt 105, der nach dem dritten Verfahrensschritt 103 ausgeführt wird, anhand der Stellung und der Position der beweglichen Einheit 10 ausgewählt. Außerdem werden diese anzusteuernden Antriebsspulen 34 in einem sechsten Verfahrensschritt 106 bestromt. Insbesondere kann vorgesehen sein, dass jeweils die Antriebsspulen 34 desjenigen Austauschmotormoduls 71 desjenigen Austauschelements 70 bestromt werden, das gerade mit dem Einfahrelement 50 verbunden ist. Ferner können die Antriebsspulen 34 desjenigen Ausfahrmotormoduls 61 desjenigen Ausfahrelements 60 bestromt werden, das gerade mit dem Austauschelement 70 verbunden ist.

In einem Ausführungsbeispiel des Verfahrens zum Betreiben des linearen Transportsystems 1 erfolgt ein logisches Weiterschalten von Positionsdetektoren 36 anhand der Stellung der Wechselvorrichtung 41. Insbesondere kann vorgesehen sein, dass jeweils die Positionsdetektoren 36 desjenigen Austauschmotormoduls 71 desjenigen Austauschelements 70 genutzt werden, das gerade mit dem Einfahrelement 50 verbunden ist. Ferner können die Positionsdetektoren 36 desjenigen Ausfahrmotormoduls 61 desjenigen Ausfahrelements 60 genutzt werden, das gerade mit dem Austauschelement 70 verbunden ist. Das logische Weiterschalten der Positionsdetektoren 36 kann dabei insbesondere beinhalten, dass in der ersten Position die Positionsdetektoren 36 logisch vom Einfahrmotormodul 51 über das Austauschmotormodul 71 des ersten Austauschelements 73 zum Ausfahrmotormodul 61 des ersten Ausfahrelements 63 und in der zweiten Position vom Einfahrmotormodul 51 über das Austauschmotormodul 71 des zweiten Austauschelements 74 zum Ausfahrmotormodul 61 des zweiten Ausfahrelements 64 geschalten werden. Dadurch kann eine durchgehende Positionserfassung der beweglichen Einheit 10 beim Durchfahren der Weiche 40 erreicht werden.

In der ersten Position der Wechselvorrichtung 41 kann vorgesehen sein, dass die Positionsdetektoren 36 des Austauschmotormoduls 71 des zweiten Austauschelements 74 deaktiviert sind. In der zweiten Position der Wechselvorrichtung 41 kann vorgesehen sein, dass die Positionsdetektoren 36 des Austauschmotormoduls 71 des ersten Austauschelements 73 deaktiviert sind. Alternativ kann jedoch auch vorgesehen sein, diese Positionsdetektoren 36 aktiviert zu lassen, beispielsweise wenn bewegliche Einheiten 10 am ersten Austauschelement 73 beziehungsweise am zweiten Austauschelement 74 angeordnet sind. Dadurch können beispielsweise bewegliche Einheiten 10 an demjenigen Austauschelement 70 (also am ersten Austauschelement 73 beziehungsweise am zweiten Austauschelement 74) angeordnet sein, die nicht mehr mit dem Einfahrelement 50 und/oder dem ersten Ausfahrelement 63 beziehungsweise dem zweiten Ausfahrelement 64 verbunden sind. Um ein Halten und/oder Positionieren der beweglichen Einheit 10 an einem solchen Austauschelement 70 steuern zu können, können jedoch die zugehörigen Positionsdetektoren 36 aktiviert bleiben.

In einem Ausführungsbeispiel des Verfahrens zum Betreiben des linearen Transportsystems 1 wird überprüft, ob die Wechselvorrichtung 41 in der ersten Position oder in der zweiten Position oder einer Zwischenposition ist. Eine Zwischenposition kann dabei eine Position sein, in der die Wechselvorrichtung 41 gerade von der ersten Position in die zweite Position bewegt wird. In der ersten Position wird eine Bestromung der Antriebsspulen 34 des Austauschmotormoduls 71 des zweiten Austauschelements 74 und des Ausfahrmotormoduls 61 des zweiten Ausfahrelements 64 verhindert. Alternativ können die Antriebsspulen 34 des Austauschmotormoduls 71 des zweiten Austauschelements 74 und des Ausfahrmotormoduls 61 des zweiten Ausfahrelements 64 derart bestromt werden, dass ein gegebenenfalls auf den jeweiligen Motormodulen 33 befindlicher Läufer 10 in seiner Position gehalten, aber nicht in eine Richtung zur Fortbewegung angetrieben wird. In der zweiten Position wird eine Bestromung der Antriebsspulen 34 des Austauschmotormoduls 71 des ersten Austauschelements 73 und des Ausfahrmotormoduls 61 des ersten Ausfahrelements 63 verhindert. Alternativ können die Antriebsspulen 34 des Austauschmotormoduls 71 des ersten Austauschelements 73 und des Ausfahrmotormoduls 61 des ersten Ausfahrelements 63 derart bestromt werden, dass ein gegebenenfalls auf den jeweiligen Motormodulen 33 befindlicher Läufer 10 in seiner Position gehalten, aber nicht in eine Richtung zur Fortbewegung angetrieben wird. In der Zwischenposition wird eine Bestromung der Antriebsspulen 34 des Einfahrmotormoduls 51 des Einfahrelements 50, des Austauschmotormoduls 71 des ersten Austauschelements 73, des Ausfahrmotormoduls 61 des ersten Ausfahrelements 63, des Austauschmotormoduls 71 des zweiten Austauschelements 74 und des Ausfahrmotormoduls 61 des zweiten Ausfahrelements 64 verhindert. Alternativ können die Antriebsspulen 34 des Einfahrmotormoduls 51 des Einfahrelements 50, des Austauschmotormoduls 71 des ersten Austauschelements 73, des Ausfahrmotormoduls 61 des ersten Ausfahrelements 63, des Austauschmotormoduls 71 des zweiten Austauschelements 74 und des Ausfahrmotormoduls 61 des zweiten Ausfahrelements 64 derart bestromt werden, dass ein gegebenenfalls auf den jeweiligen Motormodulen 33 befindlicher Läufer 10 in seiner Position gehalten, aber nicht in eine Richtung zur Fortbewegung angetrieben wird. Sind das dritte Austauschmodul 75, das vierte Austauschmodul 76 und das fünfte Austauschmodul 77 sowie das dritte Ausfahrelement 65, das vierte Ausfahrelement 66 und das fünfte Ausfahrelement 67 ebenfalls in der Weiche angeordnet, kann auch hier eine Bestromung der Antriebsspulen 34 der jeweiligen Motormodule 33 abhängig von der Position beziehungsweise der Zwischenposition verhindert werden. Auch hier können in einer alternativen Ausführungsform die Antriebsspulen 34 der jeweiligen Motormodule 33 derart bestromt werden, dass ein gegebenenfalls auf den jeweiligen Motormodulen 33 befindlicher Läufer 10 in seiner Position gehalten, aber nicht in eine Richtung zur Fortbewegung angetrieben wird.

Die Steuereinheit 5 kann jeweils eingerichtet sein, das Verfahren durchzuführen und kann hierzu mit einem Motormodul 33 oder mehreren Motormodulen 33 verbunden sein. Die Steuereinheit 5 kann eingerichtet sein, entsprechende Steuerbefehle an die Motormodule 33 auszugeben.

In einem Ausführungsbeispiel des linearen Transportsystems 1 weist dieses ferner eine Steuereinheit 5 auf. Die Steuereinheit 5 ist eingerichtet, ein Steuerprogramm anhand einer Stellung der Wechselvorrichtung 41 auszuwählen und ein logisches Weiterschalten von Antriebsspulen 34 anhand der Stellung der Wechselvorrichtung 41 vorzunehmen. Insbesondere kann die Steuereinheit 5 auch zur Ausführung des erfindungsgemäßen Verfahrens eingerichtet sein. Darüber hinaus kann vorgesehen sein, dass die Steuereinheit 5 generell eine Ansteuerung aller Motormodule 33 beziehungsweise aller Antriebsspulen 34 der Motormodule 33 vornimmt.

In einem Ausführungsbeispiel des linearen Transportsystems 1 ist die Steuereinheit 5 eingerichtet, anhand von innerhalb der Motormodule 33 angeordneten Positionsdetektoren 36 eine Position der beweglichen Einheit 10 zu bestimmen und anhand der Position der beweglichen Einheit 10 und einer Stellung der Wechselvorrichtung 41 die zum Antrieb der beweglichen Einheit 10 anzusteuernden Antriebsspulen 34 auszuwählen und eine Bestromung dieser anzusteuernden Antriebsspulen 34 zu veranlassen.

In einem Ausführungsbeispiel des linearen Transportsystems 1 ist die Steuereinheit 5 ferner eingerichtet, ein logisches Weiterschalten von Positionsdetektoren 36 anhand der Stellung der Wechselvorrichtung 41 vorzunehmen. Das logische Weiterschalten der Positionsdetektoren 36 kann dabei insbesondere beinhalten, dass in der ersten Position die Positionsdetektoren 36 logisch vom Einfahrmotormodul 51 über das Austauschmotormodul 71 des ersten Austauschelements 73 zum Ausfahrmotormodul 61 des ersten Ausfahrelements 63 und in der zweiten Position vom Einfahrmotormodul 51 über das Austauschmotormodul 71 des zweiten Austauschelements 74 zum Ausfahrmotormodul 61 des zweiten Ausfahrelements 64 geschalten werden. Dadurch kann eine durchgehende Positionserfassung der beweglichen Einheit 10 beim Durchfahren der Weiche 40 erreicht werden.

In der ersten Position der Wechselvorrichtung 41 kann vorgesehen sein, dass die Positionsdetektoren 36 des Austauschmotormoduls 71 des zweiten Austauschelements 74 deaktiviert sind. In der zweiten Position der Wechselvorrichtung 41 kann vorgesehen sein, dass die Positionsdetektoren 36 des Austauschmotormoduls 71 des ersten Austauschelements 73 deaktiviert sind. Alternativ kann jedoch auch vorgesehen sein, diese Positionsdetektoren 36 aktiviert zu lassen, beispielsweise wenn bewegliche Einheiten 10 am ersten Austauschelement 73 beziehungsweise am zweiten Austauschelement 74 angeordnet sind. Dadurch können beispielsweise bewegliche Einheiten 10 an demjenigen Austauschelement 70 (also am ersten Austauschelement 73 beziehungsweise am zweiten Austauschelement 74) angeordnet sein, die nicht mehr mit dem Einfahrelement 50 und/oder dem ersten Ausfahrelement 63 beziehungsweise dem zweiten Ausfahrelement 64 verbunden sind. Um ein Halten und/oder Positionieren der beweglichen Einheit 10 an einem solchen Austauschelement 70 steuern zu können, können jedoch die zugehörigen Positionsdetektoren 36 aktiviert bleiben.

In einem Ausführungsbeispiel des linearen Transportsystems 1 ist die Steuereinheit 5 eingerichtet, zu überprüfen, ob die Wechselvorrichtung 41 in der ersten Position oder in der zweiten Position oder einer Zwischenposition ist. Die Steuereinheit 5 ist ferner eingerichtet, in der ersten Position eine Bestromung der Antriebsspulen 34 des Austauschmotormoduls 71 des zweiten Austauschelements 74 und des Ausfahrmotormoduls 61 des zweiten Ausfahrelements 64 zu verhindern oder alternativ die Antriebspulen 34 derart zu bestrommen, dass ein Läufer 10 in seiner Position gehalten aber nicht fortbewegt wird. Die Steuereinheit 5 ist ferner eingerichtet, in der zweiten Position eine Bestromung der Antriebsspulen 34 des Austauschmotormoduls 71 des ersten Austauschelements 73 und des Ausfahrmotormoduls 61 des ersten Ausfahrelements 63 zu verhindern oder alternativ die Antriebspulen 34 derart zu bestrommen, dass ein Läufer 10 in seiner Position gehalten aber nicht fortbewegt wird. Die Steuereinheit 5 ist ferner eingerichtet, in der Zwischenposition eine Bestromung der Antriebsspulen 34 des Einfahrmotormoduls 51 des Einfahrelements 50, des Austauschmotormoduls 71 des ersten Austauschelements 73, des Ausfahrmotormoduls 61 des ersten Ausfahrelements 63, des Austauschmotormoduls 71 des zweiten Austauschelements 74 und des Ausfahrmotormoduls 61 des zweiten Ausfahrelements 64 zu verhindern oder alternativ die Antriebspulen 34 derart zu bestrommen, dass ein Läufer 10 in seiner Position gehalten aber nicht fortbewegt wird. So kann ein sicherer Betrieb des linearen Transportsystems 1 erreicht werden.

### Bezugszeichenliste

- 1: Lineares Transportsystem
- 2: Führungsschiene
- 3: erster Bereich
- 4: zweiter Bereich
- 5: Steuereinheit
- 6: Abrollfläche
- 10: bewegliche Einheit
- 11: Rolle
- 12: Positionselement
- 30: Linearmotor
- 31: Stator
- 32: Läufer
- 33: Motormodul
- 34: Antriebsspule
- 35: Magnet
- 36: Positionsdetektor
- 37: Statorzahn
- 40: Weiche
- 41: Wechselvorrichtung
- 42: weitere Weiche
- 43: weitere Wechselvorrichtung
- 44: bewegliches Weichenelement
- 45: verschiebbare Platte
- 46: Antrieb
- 47: rotierbarer Körper
- 48: Schiene
- 49: Vertiefung
- 50: Einfahrelement
- 51: Einfahrmotormodul
- 52: Einfahrschienenelement
- 53: erstes Einfahrelement
- 54: zweites Einfahrelement
- 55: Linearantrieb
- 56: Rotationsantrieb
- 57: Getriebe
- 60: Ausfahrelement
- 61: Ausfahrmotormodul
- 62: Ausfahrschienenelement
- 63: erstes Ausfahrelement
- 64: zweites Ausfahrelement
- 65: drittes Ausfahrelement
- 66: viertes Ausfahrelement
- 67: fünftes Ausfahrelement
- 70: Austauschelement
- 71: Austauschmotormodul
- 72: Austauschschienenelement
- 73: erstes Austauschelement
- 74: zweites Austauschelement
- 75: drittes Austauschelement
- 76: viertes Austauschelement
- 77: fünftes Austauschelement
- 81: erste Befestigungsplatte
- 82: zweite Befestigungsplatte
- 83: dritte Befestigungsplatte
- 84: Ausnehmung
- 85: Stützelement
- 86: Antriebsbefestigungsplatte
- 87: Versatzstruktur
- 100: Ablaufdiagramm
- 101: erster Verfahrensschritt
- 102: zweiter Verfahrensschritt
- 103: dritter Verfahrensschritt
- 104: vierter Verfahrensschritt
- 105: fünfter Verfahrensschritt
- 106: sechster Verfahrensschritt

## Patentansprüche

1. Lineares Transportsystem (1) mit einer beweglichen Einheit (10), einer Führungsschiene (2) zum Führen der beweglichen Einheit (10) sowie einem Linearmotor (30) zum Antreiben der beweglichen Einheit (10) entlang der Führungsschiene (2), wobei der Linearmotor (30) einen Stator (31) und einen Läufer (32) umfasst, wobei der Stator (31) mehrere entlang der Führungsschiene (2) stationär angeordnete Motormodule (33) aufweist, welche jeweils mehrere Antriebsspulen (34) aufweisen, wobei der Läufer (32) an der beweglichen Einheit (10) angeordnet ist und mehrere Magnete (35) umfasst, wobei die Führungsschiene (2) an den Motormodulen (33) angeordnet ist, wobei das lineare Transportsystem (1) zumindest eine Weiche (40) aufweist,
**dadurch gekennzeichnet, dass**
die Weiche (40) zumindest ein statisches Einfahrelement (50) mit einem Einfahrmotormodul (51) und einem zur Führungsschiene (2) gehörigen Einfahrschienenelement (52), zumindest zwei statische Ausfahrelemente (60) mit jeweils einem Ausfahrmotormodul (61) und jeweils einem zur Führungsschiene (2) gehörigen Ausfahrschienenelement (62) und eine Wechselvorrichtung (41) aufweist, wobei die Wechselvorrichtung (41) zumindest drei Austauschelemente (70) mit jeweils einem Austauschmotormodul (71) und jeweils einem zur Führungsschiene (2) gehörigen Austauschschienenelement (72) und die Weiche (40) eine der Anzahl der Austauschelemente (70) angepasste Anzahl an statischen Ausfahrelementen (60) mit jeweils einem Ausfahrmotormodul (61) und jeweils einem zur Führungsschiene (2) gehörigen Ausfahrschienenelement (62) aufweisen, wobei in einer ersten Position der Wechselvorrichtung (41) das Einfahrelement (50) über ein erstes Austauschelement (73) mit einem ersten Ausfahrelement (63) verbunden ist, in einer zweiten Position der Wechselvorrichtung (41) das Einfahrelement (50) über ein zweites Austauschelement (74) mit einem zweiten Ausfahrelement (64) und in einer dritten Position der Wechselvorrichtung (41) das Einfahrelement (50) über ein drittes Austauschelement (73) mit einem dritten Ausfahrelement (63) verbunden ist.

2. Lineares Transportsystem nach Anspruch 1, wobei zumindest ein Austauschelement (70) gebogen ist.

3. Lineares Transportsystem (1) nach Anspruch 1 oder 2, wobei die Wechselvorrichtung (41) einen Antrieb (46) aufweist, wobei mittels des Antriebs die Wechselvorrichtung (41) in die Positionen gebracht werden kann.

4. Lineares Transportsystem (1) nach Anspruch 3, wobei die Austauschelemente auf einem rotierbaren Körper (47) angeordnet sind, wobei mittels des Antriebs (46) eine Rotation des rotierbaren Körpers (47) auslösbar ist.

5. Lineares Transportsystem (1) nach Anspruch 3, wobei die Austauschelement auf einer verschiebbaren Platte (45) angeordnet sind, wobei mittels des Antriebs (46) eine Verschiebung der verschiebbaren Platte (45) auslösbar ist.

6. Lineares Transportsystem (1) nach einem der Ansprüche 1 bis 5, wobei die Antriebsspulen (34) innerhalb der Motormodule (33) derart angeordnet sind, dass jeweils zwei Antriebsspulen (34) einen vorgegebenen Abstand aufweisen und wobei eine in Fahrtrichtung hinten angeordnete Antriebsspule (34) im Einfahrmotormodul (51) und eine in Fahrtrichtung vorne angeordnete Antriebsspule (34) im Austauschmotormodul (71) des ersten Austauschelements (73) ebenfalls den vorgegebenen Abstand aufweisen, wenn die Wechselvorrichtung (41) in der ersten Position angeordnet ist und die in Fahrtrichtung hinten angeordnete Antriebsspule (34) im Einfahrmotormodul (51) und eine in Fahrtrichtung vorne angeordnete Antriebsspule (34) im Austauschmotormodul (71) des zweiten Austauschelements (74) ebenfalls den vorgegebenen Abstand aufweisen, wenn die Wechselvorrichtung (41) in der zweiten Position angeordnet ist.

7. Lineares Transportsystem (1) nach Anspruch 6, wobei eine in Fahrtrichtung hinten angeordnete Antriebsspule (34) im Austauschmotormodul (71) des ersten Austauschelements (73) und eine in Fahrtrichtung vorne angeordnete Antriebsspule (34) im Ausfahrmotormodul (61) des ersten Ausfahrelements (63) ebenfalls den vorgegebenen Abstand aufweisen, wenn die Wechselvorrichtung (41) in der ersten Position angeordnet ist und eine in Fahrtrichtung hinten angeordnete Antriebsspule (34) im Austauschmotormodul (71) des zweiten Austauschelements (74) und eine in Fahrtrichtung vorne angeordnete Antriebsspule (34) im Ausfahrmotormodul (61) des zweiten Ausfahrelements (64) ebenfalls den vorgegebenen Abstand aufweisen, wenn die Wechselvorrichtung (41) in der zweiten Position angeordnet ist.

8. Lineares Transportsystem (1) nach einem der Ansprüche 1 bis 7, ferner aufweisend eine Steuereinheit (5), wobei die Steuereinheit eigerichtet ist, ein Steuerprogramm anhand einer Stellung der Wechselvorrichtung (41) auszuwählen und ein logisches Weiterschalten von Antriebsspulen (34) anhand der Stellung der Wechselvorrichtung (41) vorzunehmen.

9. Lineares Transportsystem (1) nach Anspruch 8, wobei die Steuereinheit (5) eingerichtet ist, anhand von innerhalb der Motormodule (33) angeordneten Positionsdetektoren (36) eine Position der beweglichen Einheit (10) zu bestimmen und anhand der Position der beweglichen Einheit (10) und einer Stellung der Wechselvorrichtung (41) die zum Antrieb der beweglichen Einheit (10) anzusteuernden Antriebsspulen (34) auszuwählen und eine Bestromung dieser anzusteuernden Antriebsspulen (34) zu veranlassen.

10. Lineares Transportsystem (1) nach Anspruch 9, wobei die Steuereinheit (5) ferner eingerichtet ist, ein logisches Weiterschalten von Positionsdetektoren (36) anhand der Stellung der Wechselvorrichtung (41) vorzunehmen.

11. Lineares Transportsystem (1) nach einem der Ansprüche 8 bis 10, wobei die Steuereinheit (5) eingerichtet ist, zu überprüfen, ob die Wechselvorrichtung (41) in der ersten Position oder in der zweiten Position oder einer Zwischenposition ist, wobei die Steuereinheit (5) eingerichtet ist, in der ersten Position eine Bestromung der Antriebsspulen (34) des Austauschmotormoduls (71) des zweiten Austauschelements (74) und des Ausfahrmotormoduls (61) des zweiten Ausfahrelements (64) zu verhindern, wobei die Steuereinheit (5) eingerichtet ist, in der zweiten Position eine Bestromung der Antriebsspulen (34) des Austauschmotormoduls (71) des ersten Austauschelements (73) und des Ausfahrmotormoduls (61) des ersten Ausfahrelements (63) zu verhindern und wobei die Steuereinheit (5) eingerichtet ist, in der Zwischenposition eine Bestromung der Antriebsspulen (34) des Einfahrmotormoduls (51) des Einfahrelements (50), des Austauschmotormoduls (71) des ersten Austauschelements (73), des Ausfahrmotormoduls (61) des ersten Ausfahrelements (63), des Austauschmotormoduls (71) des zweiten Austauschelements (74) und des Ausfahrmotormoduls (61) des zweiten Ausfahrelements (64) zu verhindern.

12. Verfahren zum Betreiben eines linearen Transportsystems (1) nach einem der Ansprüche 1 bis 11, mit den Schritten:
- Feststellen einer Stellung einer Wechselvorrichtung (41) des linearen Transportsystems (1);
- Auswählen eines Steuerprogramms anhand der Stellung;
- Logisches Weiterschalten von Antriebsspulen (34) des linearen Transportsystems (1) anhand der Stellung.

13. Verfahren nach Anspruch 12, mit den zusätzlichen Schritten:
- Bestimmen einer Position der beweglichen Einheit (10) mittels innerhalb der Motormodule (33) angeordneten Positionsdetektoren (36);
- Auswahl von anzusteuernden Antriebsspulen (34) anhand der Stellung und der Position der beweglichen Einheit (10);
- Bestromung dieser anzusteuernden Antriebsspulen (34) .

14. Verfahren nach Anspruch 13, wobei ein logisches Weiterschalten von Positionsdetektoren (36) anhand der Stellung der Wechselvorrichtung (41) erfolgt.

15. Verfahren nach einem der Ansprüche 12 bis 14, wobei überprüft wird, ob die Wechselvorrichtung (41) in der ersten Position oder in der zweiten Position oder einer Zwischenposition ist, wobei in der ersten Position eine Bestromung der Antriebsspulen (34) des Austauschmotormoduls (71) des zweiten Austauschelements (74) und des Ausfahrmotormoduls (61) des zweiten Ausfahrelements (64) verhindert wird, wobei in der zweiten Position eine Bestromung der Antriebsspulen (34) des Austauschmotormoduls (71) des ersten Austauschelements (73) und des Ausfahrmotormoduls (61) des ersten Ausfahrelements (63) verhindert wird und wobei in der Zwischenposition eine Bestromung der Antriebsspulen (34) des Einfahrmotormoduls (51) des Einfahrelements (50), des Austauschmotormoduls (71) des ersten Austauschelements (73), des Ausfahrmotormoduls (61) des ersten Ausfahrelements (63), des Austauschmotormoduls (71) des zweiten Austauschelements (74) und des Ausfahrmotormoduls (61) des zweiten Ausfahrelements (64) verhindert wird.

## Claims

1. A linear transport system (1) having a movable unit (10), a guide rail (2) for guiding the movable unit (10) as well as a linear motor (30) for driving the movable unit (10) along the guide rail (2), wherein the linear motor (30) comprises a stator (31) and a rotor (32), wherein the stator (31) comprises a plurality of motor modules (33) which are arranged in a stationary manner along the guide rail (2) and each comprise a plurality of drive coils (34), wherein the rotor (32) is arranged on the movable unit (10) and comprises a plurality of magnets (35), wherein the guide rail (2) is arranged on the motor modules (33), wherein the linear transport system (1) comprises at least a switch (40),
**characterized in that**
the switch (40) comprises at least one static retraction element (50) with a retraction motor module (51) and a retraction rail element (52) belonging to the guide rail (2), at least two static extension elements (60), each having an extension motor module (61) and an extension rail element (62) belonging to the guide rail (2), and an exchange device (41), wherein the exchange device (41) comprises at least three exchange elements (70), each having an exchange motor module (71) and an exchange rail element (72) belonging to the guide rail (2), and the switch (40) comprises a number of static extension elements (60) adapted to the number of exchange elements (70), each of the extension elements (60) having an extension motor module (61) and an extension rail element (62) respectively belonging to the guide rail (2), wherein, in a first position of the exchange device (41), the retraction element (50) is connected to a first extension element (63) via a first exchange element (73), in a second position of the exchange device (41), the retraction element (50) is connected to a second extension element (64) via a second exchange element (74) and in a third position of the exchange device (41), the retraction element (50) is connected to the third extension element (63) via a third exchange element (73).

2. The linear transport system according to claim 1, wherein at least one exchange element (70) is curved.

3. The linear transport system (1) according to claim 1 or 2, wherein the exchange device (41) comprises a drive (46), wherein the exchange device (41) may be brought into the positions with the aid of the drive.

4. The linear transport system (1) according to claim 3, wherein the exchange elements are arranged on a rotatable body (47), wherein a rotation of the rotatable body (47) may be triggered with the aid of the drive (46).

5. The linear transport system (1) according to claim 3, wherein the exchange elements are arranged on a displaceable plate (45), wherein a displacement of the displaceable plate (45) may be triggered with the aid of the drive (46).

6. The linear transport system (1) according to any one of claims 1 to 5, wherein the drive coils (34) are arranged within the motor modules (33) in such a way that two drive coils (34) have a predetermined distance in each case and wherein a drive coil (34) arranged at the rear in the direction of travel in the retraction motor module (51) and a drive coil (34) arranged at the front in the direction of travel in the exchange motor module (71) of the first exchange element (73) also have the predetermined distance when the exchange device (41) is arranged in the first position, and the drive coil (34) arranged at the rear in the direction of travel in the retracting motor module (51) and a drive coil (34) arranged at the front in the direction of travel in the exchange motor module (71) of the second exchange element (74) also have the predetermined distance when the exchange device (41) is arranged in the second position.

7. The linear transport system (1) according to claim 6, wherein a drive coil (34) arranged at the rear in the direction of travel in the exchange motor module (71) of the first exchange element (73) and a drive coil (34) arranged at the front in the direction of travel in the extension motor module (61) of the first extension element (63) also have the predetermined distance, when the exchange device (41) is arranged in the first position and a drive coil (34) arranged at the rear in the direction of travel in the exchange motor module (71) of the second exchange element (74) and a drive coil (34) arranged at the front in the direction of travel in the extension motor module (61) of the second extension element (64) also have the predetermined distance when the exchange device (41) is arranged in the second position.

8. The linear transport system (1) according to any one of claims 1 to 7, further comprising a controller (5), wherein the controller is set up to select a control program on the basis of a position of the exchange device (41) and to carry out a logical switching of drive coils (34) on the basis of the position of the exchange device (41).

9. The linear transport system (1) according to claim 8, wherein the controller (5) is set up to determine a position of the movable unit (10) on the basis of position detectors (36) arranged within the motor modules (33) and to select the drive coils (34) to be actuated for driving the movable unit (10) on the basis of the position of the movable unit (10) and a position of the exchange device (41) and to initiate energization of these drive coils (34) to be actuated.

10. The linear transport system (1) according to claim 9, wherein the controller (5) is furthermore set up to carry out a logical switching of position detectors (36) on the basis of the position of the exchange device (41).

11. The linear transport system (1) according to any one of claims 8 to 10, wherein the controller (5) is arranged to check whether the exchange device (41) is in the first position or in the second position or in an intermediate position, wherein the controller (5) is arranged to prevent energizing of the drive coils (34) of the exchange motor module (71) of the second exchange element (74) and of the extension motor module (61) of the second extension element (64) in the first position, wherein the controller (5) is arranged to prevent energizing of the drive coils (34) of the exchange motor module (71) of the first exchange element (73) and of the extension motor module (61) of the second extension element (64) in the second position, and wherein the controller (5) is set up to prevent energizing of the drive coils (34) of the retraction motor module (51) of the retraction element (50), of the exchange motor module (71) of the first exchange element (73), of the extension motor module (61) of the first extension element (63), of the exchange motor module (71) of the second exchange element (74) and of the extension motor module (61) of the second extension element (64) in the intermediate position.

12. A method for operating a linear transport system (1) according to any one of claims 1 to 11, comprising the steps of:
- determining a position of an exchange device (41) of the linear transport system (1);
- selecting a control program based on the position;
- logically switching drive coils (34) of the linear transport system (1) based on the position.

13. The method according to claim 12, with the additional steps:
- determining a position of the movable unit (10) with the aid of position detectors (36) arranged within the motor modules (33);
- selecting drive coils (34) to be actuated on the basis of the position and the position of the moving unit (10);
- energizing these drive coils (34) to be actuated.

14. The method according to claim 13, wherein a logical switching of position detectors (36) takes place on the basis of the position of the exchange device (41).

15. The method according to any one of claims 12 to 14, wherein it is checked whether the exchange device (41) is in the first position or in the second position or in an intermediate position, wherein energizing of the drive coils (34) of the exchange motor module (71) of the second exchange element (74) and of the extension motor module (61) of the second extension element (64) is prevented in the first position, wherein energizing energization of the drive coils (34) of the exchange motor module (71) of the first exchange element (73) and of the extension motor module (61) of the first extension element (63) is prevented in the second position, and wherein energizing of the drive coils (34) of the retraction motor module (51) of the retraction element (50), of the exchange motor module (71) of the first exchange element (73), of the extension motor module (61) of the first extension element (63), of the exchange motor module (71) of the second exchange element (74) and of the extension motor module (61) of the second extension element (64) is prevented in the intermediate position.

## Revendications

1. Système de transport linéaire (1) comprenant une unité mobile (10), un rail de guidage (2) destiné à guider l'unité mobile (10) ainsi qu'un moteur linéaire (30) destiné à entraîner l'unité mobile (10) le long du rail de guidage (2), le moteur linéaire (30) comportant un stator (31) et un curseur (32), le stator (31) possédant une pluralité de modules moteurs (33) disposés de manière fixe le long du rail de guidage (2), lesquels possèdent chacun plusieurs bobines d'entraînement (34), le curseur (32) étant disposé au niveau de l'unité mobile (10) et comportant plusieurs aimants (35), le rail de guidage (2) étant disposé au niveau des modules moteurs (33), le système de transport linéaire (1) possédant au moins dispositif d'aiguillage (40),
**caractérisé en ce que**
le dispositif d'aiguillage (40) possède au moins un élément de rétraction statique (50) comprenant un module moteur de rétraction (51) et un élément rail de rétraction (52) qui appartient au rail de guidage (2), au moins deux éléments de déploiement statique (60) comprenant chacun un module moteur de déploiement (61) et chacun un élément rail de déploiement (62) qui appartient au rail de guidage (2), et un dispositif de changement (41), le dispositif de changement (41) possédant au moins trois éléments d'échange (70) comprenant chacun un module moteur d'échange (71) et chacun un élément rail d'échange (72) qui appartient au rail de guidage (2) et le dispositif d'aiguillage (40) comportant un nombre d'éléments de déploiement statiques (60) adapté au nombre des éléments d'échange (70), comprenant chacun un module moteur de déploiement (61) et chacun un élément rail de déploiement (62) qui appartient au rail de guidage (2), l'élément de rétraction (50) étant relié, dans une première position du dispositif de changement (41), à un premier élément de déploiement (63) par l'intermédiaire d'un premier élément d'échange (73), dans une deuxième position du dispositif de changement (41), l'élément de rétraction (50) étant relié à un deuxième élément de déploiement (64) par l'intermédiaire d'un deuxième élément d'échange (74) et dans une troisième position du dispositif de changement (41), l'élément de rétraction (50) étant relié à un troisième élément de déploiement (63) par l'intermédiaire d'un troisième élément d'échange (73).

2. Système de transport linéaire selon la revendication 1, au moins un élément d'échange (70) étant courbé.

3. Système de transport linéaire (1) selon la revendication 1 ou 2, le dispositif de changement (41) possédant un mécanisme d'entraînement (46), le dispositif de changement (41) pouvant être amené dans les positions au moyen du mécanisme d'entraînement.

4. Système de transport linéaire (1) selon la revendication 3, les éléments d'échange étant disposés sur un corps rotatif (47), une rotation du corps rotatif (47) pouvant être déclenchée au moyen du mécanisme d'entraînement (46).

5. Système de transport linéaire (1) selon la revendication 3, les éléments d'échange étant disposés sur une plaque coulissante (45), un coulissement de la plaque coulissante (45) pouvant être déclenché au moyen du mécanisme d'entraînement (46).

6. Système de transport linéaire (1) selon l'une des revendications 1 à 5, les bobines d'entraînement (34) étant disposées à l'intérieur des modules moteurs (33) de telle sorte que deux bobines d'entraînement (34) présentent chacune un écart prédéfini et une bobine d'entraînement (34) disposée à l'arrière dans le sens du déplacement dans le module moteur de rétraction (51) et une bobine d'entraînement (34) disposée à l'avant dans le sens du déplacement dans le module moteur d'échange (71) du premier élément d'échange (73) présentant également l'écart prédéfini, lorsque le dispositif de changement (41) est disposé dans la première position, et la bobine d'entraînement (34) disposée à l'arrière dans le sens du déplacement dans le module moteur de rétraction (51) et une bobine d'entraînement (34) disposée à l'avant dans le sens du déplacement dans le module moteur d'échange (71) du deuxième élément d'échange (74) présentant également l'écart prédéfini, lorsque le dispositif de changement (41) est disposé dans la deuxième position.

7. Système de transport linéaire (1) selon la revendication 6, une bobine d'entraînement (34) disposée à l'arrière dans le sens du déplacement dans le module moteur d'échange (71) du premier élément d'échange (73) et une bobine d'entraînement (34) disposée à l'avant dans le sens du déplacement dans le module moteur de déploiement (61) du premier élément de déploiement (63) présentant également l'écart prédéfini, lorsque le dispositif de changement (41) est disposé dans la première position et une bobine d'entraînement (34) disposée à l'arrière dans le sens du déplacement dans le module moteur d'échange (71) du deuxième élément d'échange (74) et une bobine d'entraînement (34) disposée à l'avant dans le sens du déplacement dans le module moteur de déploiement (61) du deuxième élément de déploiement (64) présentant également l'écart prédéfini, lorsque le dispositif de changement (41) est disposé dans la deuxième position.

8. Système de transport linéaire (1) selon l'une des revendications 1 à 7, comprenant en outre une unité de commande (5), l'unité de commande étant conçue pour sélectionner un programme de commande à l'aide d'un état du dispositif de changement (41) et pour effectuer un transfert logique de bobines d'entraînement (34) à l'aide de l'état du dispositif de changement (41).

9. Système de transport linéaire (1) selon la revendication 8, l'unité de commande (5) étant conçue pour, à l'aide de détecteurs de position (36) disposés à l'intérieur des modules moteurs (33), déterminer une position de l'unité mobile (10) et, à l'aide de la position de l'unité mobile (10) et d'un état du dispositif de changement (41), sélectionner les bobines d'entraînement (34) à commander pour entraîner l'unité mobile (10) et provoquer une mise sous tension de ces bobines d'entraînement (34) à commander.

10. Système de transport linéaire (1) selon la revendication 9, l'unité de commande (5) étant en outre conçue pour effectuer un transfert logique de détecteurs de position (36) à l'aide de l'état du dispositif de changement (41).

11. Système de transport linéaire (1) selon l'une des revendications 8 à 10, l'unité de commande (5) étant conçue pour vérifier si le dispositif de changement (41) se trouve dans la première position ou dans la deuxième position ou dans une position intermédiaire, l'unité de commande (5) étant conçue pour, dans la première position, empêcher une mise sous tension des bobines d'entraînement (34) du module moteur d'échange (71) du deuxième élément d'échange (74) et du module moteur de déploiement (61) du deuxième élément de déploiement (64), l'unité de commande (5) étant conçue pour, dans la deuxième position, empêcher une mise sous tension des bobines d'entraînement (34) du module moteur d'échange (71) du premier élément d'échange (73) et du module moteur de déploiement (61) du premier élément de déploiement (63), et l'unité de commande (5) étant conçue pour, dans la position intermédiaire, empêcher une mise sous tension des bobines d'entraînement (34) du module moteur de rétraction (51) de l'élément de rétraction (50), du module moteur d'échange (71) du premier élément d'échange (73), du module moteur de déploiement (61) du premier élément de déploiement (63), du module moteur d'échange (71) du deuxième élément d'échange (74) et du module moteur de déploiement (61) du deuxième élément de déploiement (64).

12. Procédé pour faire fonctionner un système de transport linéaire (1) selon l'une des revendications 1 à 11, comprenant les étapes suivantes :
- identification d'un état d'un dispositif de changement (41) du système de transport linéaire (1) ;
- sélection d'un programme de commande à l'aide de l'état ;
- transfert logique de bobines d'entraînement (34) du système de transport linéaire (1) à l'aide de l'état.

13. Procédé selon la revendication 12, comprenant les étapes supplémentaires suivantes :
- détermination d'une position de l'unité mobile (10) au moyen de détecteurs de position (36) disposés à l'intérieur des modules moteurs (33) ;
- sélection de bobines d'entraînement (34) à commander, à l'aide de l'état et de la position de l'unité mobile (10) ;
- mise sous tension de ces bobines d'entraînement (34) à commander.

14. Procédé selon la revendication 13, un transfert logique de détecteurs de position (36) étant effectué à l'aide de l'état du dispositif de changement (41).

15. Procédé selon l'une des revendications 12 à 14, un contrôle étant effectué afin de vérifier si le dispositif de changement (41) se trouve dans la première position ou dans la deuxième position ou dans une position intermédiaire, une mise sous tension des bobines d'entraînement (34) du module moteur d'échange (71) du deuxième élément d'échange (74) et du module moteur de déploiement (61) du deuxième élément de déploiement (64) étant empêchée dans la première position, une mise sous tension des bobines d'entraînement (34) du module moteur d'échange (71) du premier élément d'échange (73) et du module moteur de déploiement (61) du premier élément de déploiement (63) étant empêchée dans la deuxième position, et une mise sous tension des bobines d'entraînement (34) du module moteur de rétraction (51) de l'élément de rétraction (50), du module moteur d'échange (71) du premier élément d'échange (73), du module moteur de déploiement (61) du premier élément de déploiement (63), du module moteur d'échange (71) du deuxième élément d'échange (74) et du module moteur de déploiement (61) du deuxième élément de déploiement (64) étant empêchée dans la position intermédiaire.
